# EUROPEAN PATENT APPLICATION

(11) **EP 4 518 442 A1**
(43) Date of publication of application: **05.03.2025**
(21) Application number: 22939379.8
(22) Date of filing: 29.04.2022
(51) Int. Cl.: H04W 52/02

(54) **COMMUNICATION METHOD AND APPARATUS, AND DEVICE, CHIP, STORAGE MEDIUM, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); HU, Yi, Dongguan, Guangdong 523860 (CN)
(74) Representative: RGTH
(86) International application number: PCT/CN2022/090671
(87) International publication number: WO 2023/206533

(57) **Abstract**

Embodiments of the present application provide a communication method, apparatus (900, 1000), device (1100), chip (1200), storage medium, product, and program. The method includes: determining (S502) a mode for monitoring a WUS, where the mode for monitoring the WUS includes a first mode or a second mode; and monitoring (S502, S603) the WUS according to the mode that is determined.

## Description

### TECHNICAL FIELD

Embodiments of the present application relate to the field of mobile communication technology, and in particular, to a communication method, apparatus, device, chip, storage medium, product and program.

### BACKGROUND

In the evolution of the 5th generation mobile communication technology (5G), higher requiremets are put forward on power saving for terminal devices.

However, for most of terminal devices, there may be no need to receive data transmission for a long time, but it is still necessary to maintain a regular wake-up mechanism to monitor a possible downlink transmission. For such terminal devices, there is room for further optimization of power saving.

### SUMMARY

Embodiments of the present application provide a communication method, apparatus, device, chip, storage medium, product, and program.

In a first aspect, the embodiments of the present application provide a communication method, applied to a terminal device, and the method includes:
determining a mode for monitoring a wake-up signal (WUS), where the mode for monitoring the WUS includes a first mode or a second mode; and
monitoring the WUS according to the mode that is determined.

In a second aspect, the embodiments of the present application provide a communication method, applied to a network device, and the method includes:
determining a mode for transmitting a wake-up signal (WUS), where the mode for transmitting the WUS includes a third mode and a fourth mode; and
transmitting the WUS according to the mode that is determined.

In a third aspect, the embodiments of the present application provide a communication apparatus, and the communication apparatus includes:
a determination unit, configured to determine a mode for monitoring a wake-up signal (WUS), where the mode for monitoring the WUS includes a first mode or a second mode; and
a monitoring unit, configured to monitor the WUS according to the mode that is determined.

In a fourth aspect, the embodiments of the present application provide a communication apparatus, and the communication apparatus includes:
a determination unit, configured to determine a mode for transmitting a wake-up signal (WUS), where the mode for transmitting the WUS includes a third mode and a fourth mode; and
a communication unit, configured to transmit the WUS according to the mode that is determined.

In a fifth aspect, the embodiments of the present application provide a terminal device, including: a processor and a memory. The memory is configured to store a computer program, and the processor is configured to invoke and execute the computer program stored in the memory to perform the method according to the first aspect.

In a sixth aspect, the embodiments of the present application provide a network device, including: a processor and a memory. The memory is configured to store a computer program, and the processor is configured to invoke and execute the computer program stored in the memory to perform the method according to the second aspect.

In a seventh aspect, the embodiments of the present application provide a chip, including: a processor, configured to invoke and execute a computer program from a memory, to perform the method according to the first aspect, or to perform the method according to the second aspect.

In an eighth aspect, the embodiments of the present application provide a computer storage medium for storing a computer program. The computer program enables a terminal device to perform the method according to the first aspect, or the computer program enables a network device to perform the method according to the second aspect.

In a ninth aspect, the embodiments of the present application provide a computer program product, including a computer program instructions. The computer program instruction enables a terminal device to perform the method according to the first aspect, or the computer program instruction enables a network device to perform the method according to the second aspect.

In a tenth aspect, the embodiments of the present application provide a computer program. The computer program enables a terminal device to perform the method according to the first aspect, or the computer program enables a network device to perform the method according to the second aspect.

In the embodiments of the present application, the mode for monitoring the wake-up signal (WUS) is determined, and the mode for monitoring the WUS includes the first mode or the second mode; and the WUS is monitored according to the mode that is determined. In this way, the terminal device can monitor the WUS, and thus to indicate to monitor a downlink transmission via the WUS, thereby avoiding a situation where the terminal device needs to monitor each downlink transmission, which causes high power consumption of the terminal device, and saving the power consumption of the terminal device. In addition, according to the mode that is determined being the first mode or the second mode, the WUS is monitored, so that the terminal device can flexibly use different modes to monitor the WUS according to actual conditions, thereby improving the flexibility of the terminal device for monitoring the WUS.

### BRIEF DESCRIPTION OF THE DRAWINGS

The drawings described herein are used to provide further understanding of the present application and constitute a part of the present application. The illustrative embodiments of the present application and their descriptions are used to explain the present application, and do not constitute improper limitations on the present application. In the attached drawings.
FIG. 1 is a schematic diagram of an application scenario of the embodiments of the present application.
FIG. 2 is a schematic diagram of indicating whether a terminal device monitors a PDCCH via an energy-saving signal provided in the relevant technologies.
FIG. 3 is a schematic diagram of indicating whether a terminal device monitors paging via an energy-saving signal provided in the relevant technologies.
FIG. 4 is a structural schematic diagram of a terminal device using a WUR provided in the relevant technologies.
FIG. 5 is a schematic flowchart of a communication method provided in the embodiments of the present application.
FIG. 6 is another schematic flowchart of a communication method provided in the embodiments of the present application.
FIG. 7 is yet another schematic flowchart of a communication method provided in the embodiments of the present application.
FIG. 8 is a schematic diagram of different measurement behaviors of a terminal device provided in the embodiments of the present application.
FIG. 9 is a schematic diagram of a structural composition of a communication apparatus provided in the embodiments of the present application.
FIG. 10 is another schematic diagram of a structural composition of a communication apparatus provided in the embodiments of the present application.
FIG. 11 is a schematic structural diagram of a communication device provided in the embodiments of the present application.
FIG. 12 is a schematic structural diagram of a chip provided in the embodiments of the present application.

### DETAILED DESCRIPTION

The technical solutions in the embodiments of the present application will be described in conjunction with the drawings in the embodiments of the present application, and apparently, the described embodiments are a part of embodiments of the present application, but not all embodiments. Based on the embodiments of the present application, all other embodiments obtained by the ordinary skilled in the art without paying creative effort belong to the protection scope of the present application.

The technical solutions recorded in the embodiments of the present application may be combined arbitrarily without conflict. In the description of the present application, "a plurality of" means two or more, unless otherwise explicitly and specifically limited.

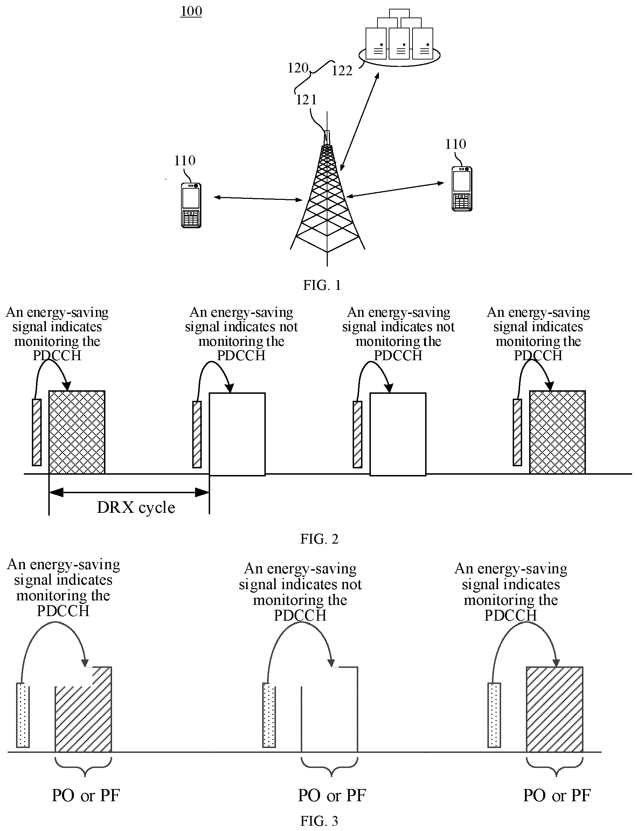

FIG. 1 is a schematic diagram of an application scenario of the embodiments of the present application.

As shown in FIG. 1, a communication system 100 may include a terminal device 110 and a network device 120. The network device 120 may communicate with the terminal device 110 via an air interface. A multi-traffic transmission is supported between the terminal device 110 and the network device 120.

It should be understood that the embodiments of the present application exemplarily illustrate only the communication system 100, but the embodiments of the present application are not limited thereto. That is, the technical solutions of the embodiments of the present application may be applied to various communication systems, such as: a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a 5G communication system (also called as a New Radio (NR) communication system), or a future communication system (such as 6G, 7G communication systems), etc.

The network device 120 in the embodiments of the present application may include an access network device 121 and/or a core network device 122. The access network device may provide a communication coverage for a specific geographical area, and may communicate with the terminal device 110 (e.g., a UE) located in the coverage area.

The terminal device in the embodiments of the present application may be referred to as a user equipment (UE), a mobile station (MS), a mobile terminal (MT), a user unit, a user station, a mobile radio station, a remote station, a remote terminal, a mobile device, a user terminal, terminal, a wireless communication device, a user agent or a user apparatus. The terminal device in the embodiments of the present application may include one or a combination of at least two of the following: a personal digital assistant (PDA), a handheld device with a wireless communication function, a computing device or other processing device connected to a wireless modem, a server, a mobile phone, a Pad, a computer with a wireless transceiver function, a handheld computer, a desktop computer, a personal digital assistant, a portable media player, a smart loudspeaker box, a navigation device, a smart watch, smart glasses, a smart necklace and other wearable devices, a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home and a vehicle in an Internet-of-vehicles system, a vehicle-mounted device, a vehicle-mounted module, a wireless modem, a handheld device, a Customer Premise Equipment (CPE), and a smart home appliance.

Optionally, the terminal device 110 may be any terminal device, including, but not limited to a terminal device connected to the network device 120 or other terminal devices in a wired or wireless manner.

Optionally, the terminal device 110 may be used for a Device to Device (D2D) communication.

The access network device 121 may include one of, or a combination of at least two of: an evolutional base station (Evolutional Node B, eNB or eNodeB) in a Long Term Evolution (LTE) system, a Next Generation Radio Access Network (NG RAN) device, a base station (gNB) in an NR system, a small station, a micro station, a wireless controller in a Cloud Radio Access Network (CRAN), an access point of Wireless-Fidelity (Wi-Fi), a transmission reception point (TRP), a relay station, an access point, a vehicle-mounted device, a wearable device, a hub, a switch, a network bridge, a router, a network device in a future evolved Public Land Mobile Network (PLMN), etc.

The core network device 122 may be a 5G core network (5G Core, 5GC) device, and the core network device 122 may include one of, or a combination of at least two of: an Access and Mobility Management Function (AMF), an Authentication Server Function (AUSF), a User Plane Function (UPF), Session Management Function (SMF), a Location Management Function (LMF), and a Policy Control Function (PCF). In some other implementations, the core network device may also be an Evolved Packet Core (EPC) device of an LTE network, for example, a Session Management Function + Core Packet Gateway (SMF+PGW-C) device. It should be understood that the SMF+PGW-C may implement both a function that the SMF can implement and a function that the PGW-C can implement. In a process of the network evolution, the above-mentioned core network device 122 may also be called as other names, or form a new network entity by dividing functions of the core network, and the embodiments of the present application are not limited thereto.

Connections may also be established between various functional units in the communication system 100 via a next generation network (next generation, NG) interface to implement the communication.

For example, the terminal device establishes an air interface connection with the access network device via an NR interface, for transmitting user plane data and control plane signaling; the terminal device may establish a control plane signaling connection with the AMF via an NG interface 1 (N1 for short); the access network device, e.g., a next generation radio access base station (gNB) may establish a user plane data connection with the UPF via an NG interface 3 (N3 for short); the access network device may establish a control plane signaling connection with the AMF via an NG interface 2 (N2 for short); the UPF may establish a control plane signaling connection with the SMF via an NG interface 4 (N4 for short); the UPF may exchange user plane data with a data network via an NG interface 6 (N6 for short); the AMF may establish a control plane signaling connection with the SMF via an NG interface 11 (N11 for short); the SMF may establish a control plane signaling connection with the PCF via an NG interface 7 (N7 for short).

FIG. 1 exemplarily shows one base station, one core network device and two terminal devices. Optionally, the wireless communication system 100 may include multiple base station devices, and other numbers of terminal devices within a coverage range of each base station, which are not limited to the embodiments of the present application.

It needs to be noted that FIG. 1 illustrates the system for which the present application is applicable, only in a form of an example, and of course, the method illustrated in the embodiments of the present application may also be applicable for other systems. Furthermore, the terms "system" and "network" herein are often used interchangeably herein. The term "and/or" herein is only an association relationship for describing associated objects, meaning that there may be three kinds of relationships, for example, A and/or B may mean three cases where: A exists alone, both A and B exist, and B exists alone. In addition, a character "/" herein generally means that associated objects before and after "/" are in an "or" relationship. It also should be understood that, the "indicate/indication/indicating/indicated" mentioned in the embodiments of the present application may be a direct indication, may also be an indirect indication, or may also represent having an association relationship. For example, A indicating B, may mean that A directly indicates B, for example, B may be obtained via A; may also mean that A indirectly indicates B, for example, A indicates C, and B may be obtained via C; may also mean that there is an association relationship between A and B. It also should be understood that, the "correspond/corresponding" mentioned in the embodiments of the present application may mean that there is a direct correspondence or indirect correspondence between two objects, may also mean that there is an association relationship between the two objects, or may also mean relationships of indicating and being indicated, of configuring and being configured, etc. It should also be understood that the "predefined", "agreed with a protocol", "predetermined", or "predefined rule" mentioned in the embodiments of the present application may be implemented by pre-saving corresponding codes, tables or other manners that may be used for indicating related information, in the device (for example, including the terminal device and the network device), and the present application does not limit its specific implementation. For example, the predefined may refer to what is defined in a protocol. It should further be understood that, in the embodiments of the present application, the "protocol" may refer to a standard protocol in the field of communication, which may include, for example, an LTE protocol, an NR protocol, and related protocols applied in the future communication system, and the present application is not limited thereto.

To facilitate understanding of the technical solutions of the embodiments of the present application, the relevant technologies of the embodiments of the present application are illustrated below, and the following relevant technologies may be, as optional solutions, arbitrarily combined with the technical solutions of the embodiments of the present application, which all belong to the protection scope of the embodiments of the present application.

To facilitate understanding of the technical solutions of the embodiments of the present application, the relevant technologies of the embodiments of the present application are illustrated below, and the following relevant technologies may be, as optional solutions, arbitrarily combined with the technical solutions of the embodiments of the present application, which all belong to the protection scope of the embodiments of the present application.

For the discontinuous reception (DRX) mechanism in the relevant technologies, during each On Duration, the terminal device needs to continuously detect a physical downlink control channel (PDCCH) to determine whether the network device schedules a data transmission to the terminal device itself.

In some of the relevant technologies, an energy-saving signal is introduced to achieve the energy saving of the terminal device. For example, the energy-saving signal may be used in combination with the DRX mechanism, and the terminal device receives an indication of the energy-saving signal before the DRX On Duration. In a case where the terminal device has data for transmission in a DRX cycle, the energy-saving signal wakes up the terminal device to monitor the PDCCH during the DRX On Duration; otherwise, in a case where the terminal device has no data for transmission in the DRX cycle, the energy-saving signal does not wake up the terminal device, and the terminal device does not need to monitor the PDCCH during the DRX On Duration.

It should be noted that the energy-saving signal in any embodiment of the present application may also be referred to as a wake-up signal or an energy saving wake-up signal in other embodiments.

FIG. 2 is a schematic diagram of indicating whether a terminal device monitors a PDCCH via an energy-saving signal provided in the relevant technologies. As shown in FIG. 2, the energy-saving signals respectively corresponding to a first and fourth DRX cycles indicate monitoring the PDCCH, and then a primary receiver of the terminal device monitors the PDCCH during the On Duration. The energy-saving signals respectively corresponding to the second and third DRX cycles indicate not monitoring the PDCCH, and the primary receiver of the terminal device does not monitor the PDCCH during the On Duration. At this time, the primary receiver of the terminal device may be in an off state, thereby reducing power consumption of the terminal device.

In this way, in a case where there is no data transmission, the terminal device may omit monitoring the PDCCH during the DRX On Duration, thereby achieving energy saving. Herein, the energy-saving signal may be carried through a DCI format 2_6. Time outside the DRX On Duration for the terminal device is referred to as an inactive time, and time during the DRX On Duration is referred to as an active time.

In some of the relevant technologies, the energy saving of theterminal device in a connected state is continuely enhanced, and enhanced solutions of search space set group switching are introduced, which includes a solution of skipping monitoring the PDCCH during intervals in data transmission (i.e., PDCCH skipping), thus to achieve the power saving. Optionally, control information related to the search space set group switching and the PDCCH skipping may be carried by the PDCCH.

Some of the relevant technologies also provide the energy saving of the terminal device in an idle/inactive state.

The terminal device in a radio resource control (RRC) idle/inactive state receives paging messages by a manner of DRX. There is a Paging Occasion (PO) in a DRX cycle. The terminal device only receives the paging messages during the PO, and does not receive the paging messages outside of the Paging Occasion, thereby achieving a purpose of the power saving of the terminal device. However, in actual situations, the probability of the terminal device being paged may not be high. The terminal device periodically detects the PDCCH in a corresponding PO, but if the terminal device detects no paging message transmitted to itself, a power waste will be caused.

In some of the relevant technologies, the energy saving of terminal device in the idle/inactive state for receiving the paging messages is optimized, and similar energy-saving signals are introduced. One type of an energy-saving signal may be referred to as a Paging Early Indication (PEI), which is used to indicate whether a terminal device receives a paging PDCCH at a target PO before the target PO arrives. The energy-saving signal is carried on the PDCCH channel and carries the energy saving indication information through DCI format 2_7. The energy-saving signal based on the PDCCH channel may carry more energy saving information, such as carrying sub-grouping information, where the sub-grouping information is used to indicate a sub-group of terminal devices corresponding to the energy saving information. For example, multiple terminal devices corresponding to a same PO may be further grouped via UE_IDs. If any terminal device in a group where the terminal device is located needs to be paged, the terminal devices in the group need to receive a paging message on the PO, otherwise, the terminal devices in the group do not need to receive the paging message. The sub-grouping information in combination with the energy saving information may more precisely indicate whether the terminal device needs to receive paging at the target PO.

FIG. 3 is a schematic diagram of indicating whether a terminal device monitors paging via an energy-saving signal provided in the relevant technologies. As shown in FIG. 3, the first and third energy-saving signals indicate monitoring the PDCCH, and the terminal device monitors paging on a corresponding PO or paging frame (PF). The second energy-saving signal indicates not monitoring the PDCCH, and the terminal device does not monitor paging on a corresponding PO or PF.

In order to further save power of a terminal device, in some of the relevant technologies, a wake-up receiver (WUR) is introduced to receive the energy-saving signal. The wake-up receiver has the characteristics of extremely low cost, extremely low complexity and extremely low power consumption. The wake-up receiver mainly receives the energy-saving signal based on a manner of envelope detection. Therefore, the energy-saving signal received by the wake-up receiver is different from signals carried by the PDCCH in some technologies in the modulation manner, waveform, etc. The energy-saving signal is an envelope signal that is mainly modulated by Amplitude Shift Keying (ASK) with a carrier signal. The demodulation of the envelope signal may also be completed by driving a low-power consumption circuit based on the energy provided by a wireless radio frequency signal, so the wake-up receiver may be passive, or the wake-up receiver may also be powered by the terminal device. Regardless of the power supply method, the receiver greatly reduces the power consumption compared to the traditional receiver of the terminal device. For example, the WUR may achieve a power consumption less than 1mw (milliwatt), which is much lower than the power consumption of traditional receivers ranging from tens to hundreds of mw. The wake-up receiver may be combined with the terminal device as an additional module of the receiver of the terminal device, or the wake-up receiver may be used alone as a wake-up function module of the terminal device.

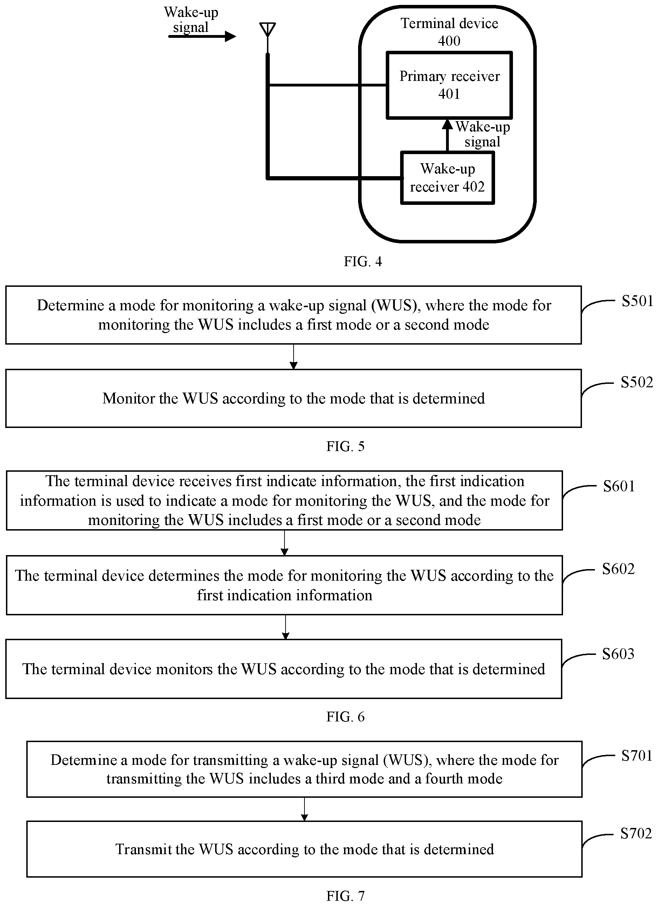

FIG. 4 is a structural schematic diagram of a terminal device using a WUR provided in the relevant technologies. As shown in FIG. 4, the terminal device 400 includes a primary receiver 401 and a wake-up receiver 402. The wake-up receiver 402 receives a wake-up signal (WUS). If the terminal device needs to turn on the primary receiver 401, a network device may turn on the primary receiver 401 of the terminal device by transmitting the wake-up signal. Otherwise, the primary receiver 401 of the terminal device may be in a turn-off state. Optionally, the wake-up signal received by the wake-up receiver 402 may be the same as or different from the wake-up signal transmitted to the primary receiver 401. Therefore, the terminal device may use the wake-up receiver 402 to monitor the wake-up signal. In a case where the terminal device has no traffic or paging message, the terminal device may always use the wake-up receiver 402. In a case where the terminal device has a traffic, the wake-up receiver 402 receives the wake-up signal and wakes up the primary receiver 401 to transmit and receive data. Therefore, compared with the mode in which the traditional terminal device 400 always uses the primary receiver 401, the power consumption of the terminal device is greatly saved.

The following illustrates a Radio Resource Management (RRM) measurement and an RRM measurement relaxed mechanism in the relevant technologies.

The terminal device in an RRC idle state needs to perform an intra-frequency or inter-frequency measurement to support mobility operations (such as performing cell reselection) based on a measurement result. The terminal device in an RRC connected stateneeds to continuously perform the intra-frequency or inter-frequency measurement based on network configuration to implement the RRM measurement to support the mobility operations, such as switching.

In order to save power of the terminal device during the measurement process, for the terminal device in the RRC idle state, the following measurement rules are currently supported.

For the intra-frequency measurement, if a measurement result of a serving cell meets: Reference Signal Receiving Power (RSRP) value Srxlev>RSRP measurement starting threshold SIntraSearchP and Reference Signal Receiving Quality (RSRQ) value Squal>RSRQ measurement starting threshold SIntraSearchQ, the terminal device may not select to perform the intra-frequency measurement; otherwise, the terminal device needs to perform the intra-frequency measurement.

For the inter-frequency measurement and inter-RAT (Radio Access Technology) measurement, the following rules are applied.

Compared with a current NR frequency point, for an NR frequency point or an inter-RAT frequency band with a higher reselection priority, the terminal device needs an RSRP, a synchronization signal and PBCH block (Synchronization Signal and Physical Broadcast Channel block, SSB), a channel state information-reference signal (CSI-RS) to perform the inter-frequency or inter-RAT measurement; and the SSB may also be referred to as a SS/PBCH block.

Compared with the current NR frequency point, for a NR frequency point or inter-RAT frequency point with a lower reselection priority or with the same reselection priority, if a measurement result of the serving cell meets a condition of Srxlev>SnonIntraSearchP and Squal>SnonIntraSearchQ, the terminal device may not select to perform the inter-frequency or inter-RAT measurement; otherwise, the terminal device performs the inter-frequency or inter-RAT measurement.

For the terminal device in the RRC connected state, the RRM measurement may be performed based on the S-measure criterion. The S-measure criterion may be used for measurement based on SSB, or may be used for measurement based on CSI-RS. That is: if a RSRP obtained by measuring by the terminal device based on the SS/PBCH block or CSI-RS is greater than a corresponding threshold ssb-RSRP or csi-RSRP, the terminal device only needs to perform a measurement for a serving cell and does not perform a measurement besides for the serving cell; otherwise, the terminal device performs the RRM measurement according to a configuration of a measuring object (MO).

The following is explanations for a measurement relaxed mechanism in some of the relevant technologies.

In some of the relevant technologies, a "low mobility" criterion is introduced. For this criterion, a network may configure an evaluation duration TSearchDeltaP for a RSRP change and a RSRP change threshold SSearchDeltaP. In a case where a RSRP change of the terminal device on the serving cell within a time period TSearchDeltaP is less than SSearchDeltaP, the terminal device is considered to meet the "low mobility" criterion. In a case where the terminal device meets the "low mobility" criterion, the terminal device uses a longer measurement interval when performing the RRM measurement on a neighboring cell. A fixed scaling factor is used to increase the measurement interval, that is, a measurement for a serving cell and/or neighboring cell is performed once every K measurements, that is, the measurement is relaxed. K may be an integer greater than or equal to 2. Taking K as 3 as an example, if the relaxed measurement is not applied (i.e., applying the normal measurement/normal RRM measurement), the terminal device needs to perform three times of measurement for the serving cell and/or neighboring cell within a time period, and if the relaxed measurement is applied, the terminal device only needs to perform the measurement for the serving cell and/or neighboring cell once within the time period; wherein the time period can be a duration corresponding to a length of three times of a measurement cycles. After completing the cell selection/reselection, the terminal device needs to perform the normal RRM measurement at least within the time period TSearchDeltaP.

The criterion of low mobility are as follows: (SrxlevRef - Srxlev)<SSearchDeltaP (indicating that a difference between a current RSRP measurement value and a reference value is small enough);
where Srxlev = a current measurement value of Srxlev of the serving cell; and
SrxlevRef = a reference value of Srxlev of the serving cell, which is configured by using the following rules.

In a case where the terminal device selects or reselects a cell (the reference value needs to be updated if the cell changes), or if (Srxlev-SrxlevRef)>0 (the current measurement value increases, and the reference value needs to be updated to the current value), or a criterion of measurement relaxation is not met during the time of TSearchDelta (requirements of measurement relaxation are not met, and the reference value is updated to the current measurement value), in the above cases the terminal device needs to configure the reference value SrxlevRef to the current measurement value of Srxlev of the serving cell.

In some of the relevant technologies, the introduced "low mobility" criterion has been enhanced. A main change is the introduction of a second threshold SSearchDeltaP and a second TSearchDelta to support a further relaxation (reflected in a larger scaling factor) for measurements for low mobility scenarios (such as stationary terminal devices or quasi-stationary terminal devices).

In some embodiments, in order to reduce the power consumption of the terminal device, the terminal device may additionally add an receiver (corresponding to a secondary receiver in the embodiments of the present application) on the basis of the current existing receiver (corresponding to the primary receiver in the embodiments of the present application), and the additionally added receiver may include a wake-up receiver (WUR). The WUR may be integrated with the primary receiver, or the WUR may be configured separately from the primary receiver. In some scenarios, the WUR may replace the primary receiver to receive the WUS and/or perform the RRM measurement. In this way, the WUR can not only receive the WUS but also has the function of RRM measurement.

In some embodiments, the power consumption of the WUR in working may be lower than the power consumption of the primary receiver in working, and/or a circuit structure of the WUR is simpler than a circuit structure of the primary receiver, and/or a measurement accuracy of the WUR in a case of performing the RRM measurement is lower than a measurement accuracy of the primary receiver in a case of performing the RRM measurement, and/or a volume of the WUR is smaller than a volume of the primary receiver.

Since the power consumption of the WUR in working is less than the power consumption of the primary receiver in working, in some scenarios, a function of reducing the power consumption of the terminal device can be achieved by replacing the primary receiver with the WUR.

Therefore, after the introduction of the wake-up receiver (WUR), the terminal device may use the WUR as reasonably as possible in a case where there is no traffic, thereby achieving a goal of saving power. But on the other hand, functions of the WUR are relatively limited. For example, some WURs cannot perform the RRM measurement, or even if some WURs have the function of RRM measurement, the performance (e.g., measurement accuracy) on the RRM measurement of these WURs is slightly worse than the performance on the RRM measurement of a traditional receiver (i.e., the primary receiver). For example, some WURs may only perform the measurement for serving cells, but not for a neighboring cell. As another example, in a case where the channel quality is poor, a measurement result of a serving cell and/or neighboring cell obtained by measuring by the WUR is inaccurate. Therefore, if the terminal device uses the WUR all the time, mobility risks may be brought out potentially, that is, for a terminal device whose location varies by motion, the mobility cannot be supported well. On the other hand, due to the low complexity of the WUR, the WUR only supports simple waveforms and modulation manners, the frequency efficiency of WUR-WUS (the WUR-WUS refers to a WUS received by the WUR, i.e., the wake-up signal or energy-saving signal) transmission is low. During a peak period of traffics on the network side, due to tight network resources, the network hopes to turn off corresponding WUS functions of the WUR to reclaim the corresponding transmission resources. Therefore, a reasonable mechanism needs to be designed to ensure that WUR-WUS is turned off to return to a traditional energy-saving mode or a traditional non-energy saving mode.

In response to the above requirements, a method of using a low-power consumption WUR is proposed in the embodiments of the present application.

To facilitate understanding of the technical solutions of the embodiments of the present application, the technical solutions of the present application are described in detail below through specific embodiments. The above technologies may be arbitrarily combined with the technical solutions of the embodiments of the present application as optional solutions, which all belong to the protection scope of the embodiments of the present application. The embodiments of the present application include at least part of the following contents.

FIG. 5 is a schematic flowchart of a communication method provided in the embodiments of the present application. As shown in FIG. 5, the method is applied to a terminal device, and the method includes:
S501, determining a mode for monitoring a wake-up signal (WUS), where the mode for monitoring the WUS includes a first mode or a second mode.
S502, monitoring the WUS according to the mode that is determined.

Optionally, the terminal device may monitor a WUS transmitted by a network device. Optionally, in some other embodiments, the terminal device may monitor a WUS transmitted by another terminal device via a sidelink.

Optionally, the terminal device may determine the mode for monitoring the WUS in a case of monitoring the WUS based on the first mode. Optionally, the terminal device may determine the mode for monitoring the WUS in a case of monitoring the WUS based on the second mode. Optionally, the terminal device may determine the mode for monitoring the WUS in an RRC_IDLE state (idle state), an RRC_CONNECTED state (connected state), or an RRC_INACTIVE state (inactive state).

Optionally, in a case where the terminal device is in the idle state, a primary receiver of the terminal device may be in at least one of the following states: an off-work state, a turn-off state, a non-awake state, a sleeping state, etc. Optionally, in a case where the terminal device is in the active state or connected state, the primary receiver of the terminal device may be in at least one of the following states: a working state, a turn-on state, a wake-up state, a running state, an on state, etc. Optionally, in a case where the terminal device is in the inactive state, the primary receiver of the terminal device may be in the turn-off state or the turn-on state.

Optionally, the primary receiver and a secondary receiver of the terminal device may be different receiving units in the terminal device. The primary receiver of the terminal device may be used to receive control information and/or data information, and the primary receiver of the terminal device may also be used to receive the WUS. The secondary receiver of the terminal device may at least be used to receive the WUS. Optionally, the secondary receiver and/or the primary receiver may also control a working state of the primary receiver. Optionally, the primary receiver and/or the secondary receiver may control a state of the secondary receiver.

Optionally, in any embodiment of the present application, the secondary receiver may include a WUR.

Optionally, in a case where the primary receiver of the terminal device is turned on, the secondary receiver of the terminal device may be turned off. Optionally, in a case where the secondary receiver of the terminal device is turned on, the primary receiver of the terminal device may be turned off. Optionally, the primary receiver and the secondary receiver of the terminal device may be turned on or off at the same time, or the primary receiver and the secondary receiver of the terminal device may be turned on or off at different time. For example, an implementation of switching from the primary receiver receiving the WUS to the secondary receiver receiving the WUS may include: first turning on the secondary receiver, and then turning off the primary receiver. Optionally, the turning on of the secondary receiver and the turning off of the primary receiver may be separated by a preset time length or a preset time unit. For example, an implementation of switching from the secondary receiver receiving the WUS to the primary receiver receiving the WUS may include: first turning on the primary receiver, and then turning off the secondary receiver. Optionally, the turning on of the primary receiver and the turning off of the secondary receiver may be separated by a preset time length or a preset time unit.

Optionally, turning on the primary receiver may also be referred to as one of the following: starting the primary receiver, enabling the primary receiver to receive the WUS, and enabling functions of the primary receiver. Optionally, turning off the primary receiver may also be referred to as one of the following: stopping the primary receiver, disabling the primary receiver from receiving the WUS, and disabling the functions of primary receiver.

Optionally, turning on the secondary receiver may also be referred to as one of the following: starting the secondary receiver, enabling the secondary receiver to receive the WUS, and enabling functions of the secondary receiver. Optionally, turning off the secondary receiver may also be referred to as one of the following: stopping the secondary receiver, disabling the secondary receiver from receiving the WUS, and disabling the functions of the secondary receiver.

Optionally, the terminal device may determine that the mode for monitoring the WUS is the first mode or the second mode in a case of monitoring the WUS based on the first mode. Optionally, the terminal device may determine that the mode for monitoring the WUS is the first mode or the second mode in a case of monitoring the WUS based on the second mode. Optionally, in a case where the mode for monitoring the WUS is determined as the first mode, the terminal device monitors the WUS based on the first mode. In a case where the mode for monitoring the WUS is determined as the second mode, the terminal device monitors the WUS based on the second mode.

Optionally, the WUS monitored by the terminal device based on the first mode is different from the WUS monitored based on the second mode. Optionally, the WUS monitored by the terminal device based on the first mode is the same as the WUS monitored based on the second mode.

Optionally, the terminal device monitors the WUS according to the mode that is determined and at least one of the following: a starting moment of monitoring the WUS, a starting time unit of monitoring the WUS, a duration of monitoring the WUS, a time unit of monitoring the WUS, an ending moment of monitoring the WUS, an ending time unit of monitoring the WUS, a starting moment of monitoring the WUS based on the first mode, a starting time unit of monitoring the WUS based on the first mode, a duration of monitoring the WUS based on the first mode, a time unit of monitoring the WUS based on the first mode, an ending moment of monitoring the WUS based on the first mode, an ending time unit of monitoring the WUS based on the first mode, a starting moment of monitoring the WUS based on the second mode, a starting time unit of monitoring the WUS based on the second mode, a duration of monitoring the WUS based on the second mode, a time unit of monitoring the WUS based on the second mode, an ending moment of monitoring the WUS based on the second mode, and an ending time unit of monitoring the WUS based on the second mode.

Optionally, the time unit in any embodiment of the present application may include at least one of the following: one or more symbols, one or more slots, one or more subframes, or one or more system frames.

Optionally, the WUS may be used to indicate at least one of the following: waking up the primary receiver, a duration of waking up the primary receiver, a time unit of waking up the primary receiver, a starting moment of waking up the primary receiver, a starting time unit of waking up the primary receiver, an ending moment of waking up the primary receiver, an ending time unit of waking up the primary receiver, a cycle of waking up the primary receiver, waking up the secondary receiver, a duration of waking up the secondary receiver, a time unit of waking up the secondary receiver, a starting moment of waking up the secondary receiver, a starting time unit of waking up the secondary receiver, an ending moment of waking up the secondary receiver, an ending time unit of waking up the secondary receiver, a cycle of waking up the secondary receiver, monitoring a channel, a duration of monitoring the channel, a time unit of monitoring the channel, a starting moment of monitoring the channel, a starting time unit of monitoring the channel, an ending moment of monitoring the channel, an ending time unit of monitoring the channel, or a cycle of monitoring the channel. Optionally, the channel may include a PDCCH and/or a physical downlink shared channel (PDSCH).

In the embodiments of the present application, the mode for monitoring the wake-up signal (WUS) is determined, and the mode for monitoring the WUS includes a first mode or a second mode; and the WUS is monitored according to the mode that is determined. In this way, the terminal device can monitor the WUS, and indicates whether to monitor a downlink transmission via the WUS, thereby avoiding a situation where the terminal device needs to monitor each downlink transmission, resulting in high power consumption of the terminal device, and saving the power consumption of the terminal device; in addition, according to the mode that is determined being the first mode or the second mode, the WUS is monitored, so that the terminal device can flexibly use different modes to monitor the WUS according to actual conditions, thereby improving the flexibility of the terminal device in monitoring the WUS.

In some embodiments, the receiver of the terminal device includes the primary receiver and the secondary receiver, and
the first mode is used to indicate a mode for monitoring the WUS by the primary receiver; and
the second mode is used to indicate a mode for monitoring the WUS by the secondary receiver.

Optionally, in the first mode, the primary receiver of the terminal device is turned on and the secondary receiver is turned off. Optionally, in the second mode, the primary receiver of the terminal device is turned off and the secondary receiver is turned on.

Optionally, in the first mode, the primary receiver of the terminal device is in a normal working mode, and/or the primary receiver of the terminal device is able to receive the PDCCH and/or the PDSCH. Optionally, in the second mode, the primary receiver of the terminal device is in a low-power consumption mode or a zero-power consumption mode, and/or the terminal device is unable to receive the PDCCH and/or the PDSCH.

Optionally, the primary receiver and/or the secondary receiver may periodically monitor the WUS. Optionally, the primary receiver and/or the secondary receiver may periodically monitor the WUS at a specific time unit. Optionally, the primary receiver and/or the secondary receiver may monitor the WUS based on pre-configuration information or configuration information transmitted by the network device.

Optionally, in any embodiment of the present application, the network device transmitting the configuration information to the terminal device may include: transmitting, by the network device, the configuration information to the terminal device via RRC information or system information. In other embodiments, the network device may transmit the configuration information to the terminal device via other information, e.g., downlink control information (DCI), which is not limited in the embodiments of the present application.

Optionally, since the power consumption of the secondary receiver is low or may reach zero-power consumption, in some embodiments, the secondary receiver may be always turned on, so that the secondary receiver may continuously monitor the WUS.

Optionally, the terminal device may be based on the first mode, with the primary receiver periodically monitoring the WUS at the specific time unit. Optionally, the terminal device may be based on the second mode, with the secondary receiver periodically monitoring the WUS at the specific time unit, or the secondary receiver continuously monitoring the WUS.

Optionally,a cycle corresponding to the primary receiver monitoring the WUS may be smaller than, equal to, or larger than a cycle corresponding to the secondary receiver monitoring the WUS. Optionally, a duration of the primary receiver monitoring the WUS each time may be less than, equal to, or greater than a duration of the secondary receiver monitoring the WUS each time.

In some embodiments, in a case where the terminal device uses the primary receiver to monitor the WUS according to the first mode that is determined, and in a case where the primary receiver monitors the WUS, the primary receiver may monitor the subsequent PDCCH and/or PDSCH based on the WUS. In other embodiments, in a case where the terminal device uses the secondary receiver to monitor the WUS according to the second mode that is determined, and in a case where the secondary receiver monitors the WUS, the secondary receiver may transmit the WUS or other wake-up signals to the primary receiver to turn on the primary receiver, so that the primary receiver may monitor the subsequent PDCCH and/or PDSCH based on WUS.

Optionally, in a case where the primary receiver has completed monitoring the subsequent PDCCH and/or PDSCH based on the WUS, or has monitored the PDCCH and/or PDSCH for a configured duration, the primary receiver may transmit the WUS or other wake-up signals to the secondary receiver to turn on the secondary receiver, and the secondary receiver then monitors the WUS.

Optionally, in a case where the primary receiver transmits the WUS or other wake-up signals to the secondary receiver, the primary receiver may be turned off, or the primary receiver may be turned off after a time period, or the primary receiver may be turned off upon receiving an acknowledgement signal transmitted by the secondary receiver. In a case where the secondary receiver transmits the WUS or other wake-up signals to the primary receiver, the secondary receiver may be turned off, or the secondary receiver may be turned off after a time period, or the secondary receiver may be turned off upon receiving an ackonwledgement signal transmitted by the primary receiver.

In some embodiments, monitoring the WUS according to the mode that is determined includes: in a case where the mode that is determined is the first mode, using, by the terminal device, the primary receiver to monitor the WUS.

In some other embodiments, monitoring the WUS according to the mode that is determined includes: in a case where the mode that is determined is the second mode, using, by the terminal device, the secondary receiver to monitor the WUS.

Optionally, in a case where the mode that is determined is the first mode, the primary receiver periodically monitors the WUS. Optionally, in a case where the mode that is determined is the second mode, the secondary receiver periodically monitors the WUS, or the secondary receiver continuously monitors the WUS.

For example, in a case where the terminal device uses the first mode to monitor the WUS, that is, the primary receiver monitors the WUS, if the mode that is determined is the first mode, the primary receiver continues to be used to monitor the WUS.

As another example, in a case where the terminal device uses the second mode to monitor the WUS, that is, the secondary receiver monitors the WUS, if the mode that is determined is the first mode, the primary receiver is switched to monitor the WUS.

As another example, in a case where the terminal device uses the second mode to monitor the WUS, that is, the secondary receiver monitors the WUS, if the mode that is determined is the second mode, the secondary receiver continues to be used to monitor the WUS.

As another example, in a case where the terminal device uses the first mode to monitor the WUS, that is, the primary receiver monitors the WUS, if the mode that is determined is the second mode, the secondary receiver is switched to to monitor the WUS.

Optionally, an implementation of switching from the secondary receiver monitoring the WUS to the primary receiver monitoring the WUS may be achieved by the secondary receiver transmitting the WUS or other wake-up signals to the primary receiver. Optionally, an implementation of switching from the primary receiver monitoring the WUS to the secondary receiver monitoring the WUS may be achieved by the primary receiver transmitting the WUS or other wake-up signal to the secondary receiver.

Optionally, in a case where the primary receiver receives the WUS, the secondary receiver may be turned off. Optionally, in a case where the secondary receiver receives the WUS, the primary receiver may be turned off.

In some embodiments, if the mode that is determined is the first mode, the terminal device turns off the secondary receiver, and/or if the mode that is determined is the second mode, the terminal device turns off the primary receiver.

For example, in a case where the terminal device uses the first mode to monitor the WUS, that is, the primary receiver monitors the WUS and the secondary receiver is turned off, if the mode that is determined is the first mode, the primary receiver continues to be used to monitor the WUS and the secondary receiver remains to be turned off.

As another example, in a case where the terminal device uses the second mode to monitor the WUS, that is, the secondary receiver monitors the WUS and the primary receiver is turned off, if the mode that is determined is the first mode, the primary receiver is switched to monitor the WUS and the secondary receiver is turned off.

As another example, in a case where the terminal device uses the second mode to monitor the WUS, that is, the secondary receiver monitors the WUS and the primary receiver is turned off, if the mode that is determined is the second mode, the secondary receiver continues to be used to monitor the WUS and the primary receiver remains turned off.

As another example, in a case where the terminal device uses the first mode to monitor the WUS, that is, the primary receiver monitors the WUS and the secondary receiver is turned off, if the mode that is determined is the second mode, the secondary receiver is switched to monitor the WUS and the primary receiver is turned off.

Optionally, the terminal device may determine at least one of the following based on the pre-configuration information and/or the configuration information of the network device: a starting moment and/or starting time unit of turning on the primary receiver, a starting moment and/or starting time unit of turning off the primary receiver, a duration and/or time unit of turning on the primary receiver, a duration and/or time unit of turning off the primary receiver, a starting moment and/or starting time unit of turning on the secondary receiver, a starting moment and/or starting time unit of turning off the secondary receiver, a duration and/or time unit of turning on the secondary receiver, a duration and/or time unit of turning off the secondary receiver, and a duration and/or time unit of turning on the secondary receiver, or a duration and/or time unit of turning off the secondary receiver, and so on.

Optionally, the implementation of switching from the primary receiver receiving the WUS to the secondary receiver receiving the WUS may include: turning on the primary receiver and turning off the secondary receiver simultaneously, or turning on the secondary receiver first and then turning off the primary receiver. Optionally, the turning on of the secondary receiver and the turning off of the primary receiver may be separated by the preset time length or the preset time unit.

Optionally, the implementation of switching from the secondary receiver receiving the WUS to the primary receiver receiving the WUS may include: turning on the secondary receiver and turning off the primary receiver simultaneously, or turning on the primary receiver first and then turning off the secondary receiver. Optionally, the turning on of the primary receiver and the turning off of the secondary receiver may be separated by the preset time length or the preset time unit.

The secondary receiver and the primary receiver are illustrated below.

In some embodiments, a modulation manner supported by the secondary receiver is simpler than a modulation manner supported by the primary receiver. For example, the modulation manner supported by the secondary receiver may include at least one of the following: amplitude shift keying (ASK), phase shift keying (PSK), frequency shift keying (FSK), etc. The modulation manner supported by the primary receiver may include at least one of the following: quadrature phase shift keying (QPSK), quadrature amplitude modulation (QAM), orthogonal frequency division multiplexing (OFDM), etc. In some embodiments, the primary receiver may also support at least one modulation manner of ASK, PSK, and FSK.

In some embodiments, a modulation waveform supported by the secondary receiver is simpler than a modulation waveform supported by the primary receiver. For example, the modulation waveform supported by the secondary receiver may include at least one of the following: a waveform corresponding to an ASK signal, a waveform corresponding to a PSK signal, or a waveform corresponding to an FSK signal. The modulation waveform supported by the primary receiver may include at least one of the following: a waveform corresponding to a QPSK signal, a waveform corresponding to a QAM signal, or a waveform corresponding to an OFDM signal. In some embodiments, the modulation waveform supported by the primary receiver may also include a waveform corresponding to at least one of the ASK, PSK, or FSK signals.

In some embodiments, a frequency supported by the secondary receiver is different from a frequency supported by the primary receiver. Optionally, the frequency may include at least one of the following: a frequency range, a starting location of the frequency, an ending location of the frequency, a central frequency, etc. For example, the frequency supported by the secondary receiver may be higher or lower than the frequency supported by the primary receiver.

In some embodiments, a transmission rate supported by the secondary receiver is lower than a transmission rate supported by the primary receiver. For example, the transmission rate supported by the secondary receiver is less than a first rate threshold, and a value of the first rate threshold may be in a range of 1 Kbps to 1 Mbps. For example, the value of the first rate threshold may be 1 Kbps, 128 Kbps, 515 Kbps, 1 Mbps, etc. The transmission rate supported by the primary receiver may be greater than the first rate threshold. For example, the transmission rate supported by the primary receiver may be greater than 10 Kbps, 100 Kbps, 1000 Kbps, 1 Gbps, etc.

In some embodiments, a bandwidth supported by the secondary receiver is narrower than a bandwidth supported by the primary receiver. For example, a value of the bandwidth supported by the secondary receiver may be less than or equal to a value of a first bandwidth threshold, and the value of the first bandwidth threshold may be in the range of 1 KB to 1 MB. For example, the value of the first bandwidth threshold may be 1 KB, 128 KB, 515 KB, 1 MB, etc. A value of the bandwidth supported by the primary receiver may be greater than the value of the first bandwidth threshold, for example, the bandwidth supported by the primary receiver may be greater than 10 KB, 100 KB, 1000 KB, 1 GB, etc.

In some embodiments, a bit rate supported by the secondary receiver is lower than a bit rate supported by the primary receiver. For example, the bit rate supported by the secondary receiver is less than or equal to a first bit rate threshold, and the first bit rate threshold may be from 0.3 to 0.6. For example, the first bit rate threshold may be 0.3, 0.5 or 0.6. The bit rate supported by the primary receiver may be greater than the first bit rate threshold. For example, the bit rate supported by the primary receiver may be greater than 0.7, 0.8, 0.9, or close to 1.

Optionally, in some other embodiments, at least one of the following supported by the secondary receiver and the primary receiver may be the same: the modulation manner, the modulation waveform, the modulation rate, the bandwidth, the bit rate, or the frequency.

In some embodiments, the WUS monitored based on the first mode is different from the WUS monitored based on the second mode in at least one of the following: the modulation manner, the modulation waveform, a corresponding frequency resource, the transmission rate, the bandwidth, or the bit rate.

In this way, the WUS monitored by the primary receiver and the WUS monitored by the secondary receiver are different in at least one of the following: the modulation manner, the modulation waveform, the corresponding frequency resource, the transmission rate, the bandwidth, or the bit rate.

FIG. 6 is another schematic flowchart of a communication method provided in the embodiments of the present application. As shown in FIG. 6, the method is applied to a terminal device, and the method includes:
S601, receiving, by the terminal device, first indication information, where the first indication information is used to indicate a mode for monitoring the WUS; where the mode for monitoring the WUS includes a first mode or a second mode.

Optionally, the terminal device receives the first indication information transmitted by a network device. Optionally, in some other embodiments, the terminal device monitors the first indication information transmitted by another terminal device via a sidelink.

S602, the terminal device determines the mode for monitoring the WUS according to the first indication information.

S603, the terminal device monitors the WUS according to the mode that is determined.

Optionally, in some other embodiments, the first indication information is used to indicate a primary receiver to receive the WUS, or the first indication information is used to indicate a secondary receiver to receive the WUS.

Optionally, the terminal device may determine a downlink resource, and detect the first indication information on the downlink resource. Optionally, the downlink resource may be a resource corresponding to the PDCCH. Optionally, the downlink resource may be a periodic resource or a non-periodic resource. Optionally, the downlink resource may be determined based on pre-configuration information of the terminal device, or based on configuration information transmitted by the network device.

Optionally, the first indication information received by the primary receiver and the first indication information received by the secondary receiver are different in one of the following: a modulation manner, a modulation waveform, a corresponding frequency resource, a transmission rate, a bandwidth, or a bit rate. Optionally, the first indication information received by the primary receiver and the first indication information received by the secondary receiver may be the same.

Optionally, the first indication information may be carried in the WUS. Optionally, the first indication information may be carried in a signal other than the WUS. Optionally, the first indication information may be carried in at least one of the following: a resource used to carry a cell reference signal (CRS), a resource used to carry a demodulation reference signal (DMRS), a resource used to carry a phase tracking reference signal (PT-RS), or the like.

Optionally, the first indication information may also include or indicate monitoring parameter information. Optionally, the monitoring parameter information includes at least one of the following: a bandwidth for receiving the WUS, a time domain location for receiving the WUS, a frequency location for receiving the WUS, a time for starting to receive the WUS, or a time of the first indication information taking effect. Optionally, the terminal device monitoring the WUS may include: monitoring, by the terminal device, the WUS based on the monitoring parameter information.

Optionally, in some other embodiments, the terminal device may pre-configure the monitoring parameter information, and the terminal device monitors the WUS based on the pre-configured monitoring parameter information.

In some embodiments, the first indication information is specifically used to indicate the first mode.

Optionally, in a case where the terminal device currently uses the first mode to monitor the WUS, if the received first indication information is used to indicate the first mode, the terminal device still uses the first mode to monitor the WUS.

Optionally, in a case where the terminal device currently uses the second mode to monitor the WUS, if the received first indication information is used to indicate the first mode, the terminal device switches to using the first mode to monitor the WUS.

In some embodiments, the first indication information is carried by one or more of the following: an RRC signaling, a broadcast signaling, a wireless system message, a paging message, or a historical WUS.

Optionally, in a case where the terminal device is in the RRC_IDLE or RRC_INACTIVE state, the first indication information is carried by one or more of the following: the RRC signaling, the broadcast signaling, the wireless system message, or the paging message.

Optionally, at least one of the RRC signaling, the broadcast signaling, the wireless system message, or the paging message may be received by the primary receiver. Optionally, in some other embodiments, at least one of the RRC signaling, the broadcast signaling, the wireless system message, or the paging message may be received by the secondary receiver.

Optionally, the historical WUS may be received by the secondary receiver, or may be received by the primary receiver.

In this way, the terminal device may receive the historical WUS and determine the mode for monitoring the wake-up signal (WUS) according to the first indication information in the historical WUS.

Optionally, in any embodiment of the present application, the historical WUS may be a WUS that has been received by the terminal device.

Optionally, the terminal device may receive multiple WUSs, and the first indication information are included in at least portion of the multiple WUSs.

Optionally, the terminal device may determine whether to use the first mode or the second mode for monitoring the WUS in a next cycle based on the first indication information in the WUS monitored in the current cycle.

Optionally, the terminal device may determine, based on the first indication information in a currently parsed WUS, whether to use the first mode or the second mode for monitoring the WUS after the currently parsed WUS, or whether to use the first mode or the second mode for monitoring the WUS for a time period after the currently parsed WUS.

In some embodiments, the first indication information is received by the secondary receiver, and/or the first indication information is received by the primary receiver.

Optionally, in a case where the first indication information is received by the secondary receiver, the first indication information may be carried by the WUS or other signals other than the WUS.

Optionally, in a case where the first indication information is received by the primary receiver, the first indication information may be carried by at least one of the following: the RRC signaling, the broadcast signaling, the wireless system message, or the paging message.

Optionally, in a case where the first indication information is specifically used to indicate the first mode, the first indication information is received by the secondary receiver. Optionally, in a case where the first indication information is specifically used to indicate the first mode, the first indication information is received by the primary receiver.

Optionally, in a case where a mode used currently for the terminal device to monitor the WUS is the first mode, or in a case where the primary receiver of the terminal device is turned on and the secondary receiver is turned off, the first indication information is received by the primary receiver.

Optionally, in a case where the mode used currently for the terminal device to monitor the WUS is the second mode, or in a case where the primary receiver of the terminal device is turned off and the secondary receiver is turned on, the first indication information is received by the secondary receiver.

In some embodiments, the first indication information is specifically used to indicate the second mode.

Optionally, in a case where the terminal device currently uses the first mode to monitor the WUS, if the received first indication information is used to indicate the second mode, the terminal device switches to using the second mode to monitor the WUS.

Optionally, in a case where the terminal device currently uses the second mode to monitor the WUS, if the received first indication information is used to indicate the second mode, the terminal device still uses the second mode to monitor the WUS.

In some embodiments, the first indication information is carried by one or more of the following: the RRC signaling, the broadcast signaling, the wireless system message, the paging message, or the historical WUS.

In some embodiments, the first indication information is received by the primary receiver. Optionally, in some other embodiments, the first indication information is received by the secondary receiver.

Optionally, in a case where the first indication information is specifically used to indicate the second mode, the first indication information is received by the primary receiver. Optionally, in a case where the first indication information is specifically used to indicate the second mode, the first indication information is received by the secondary receiver.

Optionally, the first indication information may be indicated by at least one of the following: an explicit indication, an implicit indication, a direct indication, or an indirect indication.

In some embodiments, after the primary receiver receives the first indication information, the primary receiver is turned off and the secondary receiver is turned on.

In some implementation scenarios, the network device may first transmit the first indication information to the terminal device, to indicate to turn on the WUR, and the terminal device may use the second mode to monitor the WUS; thereafter, the network device may first transmit second indication information to the terminal device, to indicate to turn off the WUR, and the terminal device may use the first mode to monitor the WUS.

In some embodiments, the first indication information is indicated in an explicit manner, and/or the first indication information is indicated in an implicit manner. In some other embodiments, the first indication information is indicated by a direct indication manner, and/or the first indication information is indicated by an indirect indication manner.

Optionally, the direct indication may include: directly indicating the first indication information in the explicit or implicit manner. Optionally, the indirect indication may include: indicating other information in the explicit or implicit manner, and determining the first indication information according to the other information.

In some embodiments, the first indication information being indicated in the explicit manner includes: the first indication information including one or more bits, and the one or more bits being used to indicate the mode of the WUS.

Optionally, a plurality of bits may be consecutive or discontinuous or at least partially consecutive. For example, taking the mode of the WUS being indicated by one bit as an example, a value of one bit included in the first indication information for indicating the mode of the WUS is 1, which indicates that the first indication information indicates the first mode, and the value of one bitincluded in the first indication information for indicating the mode of the WUS is 0, which indicates that the first indication information indicates the second mode; or, the value of one bit included in the first indication information for indicating the mode of the WUS is 0, which indicates that the first indication information indicates the first mode, and the value of one bit included in the first indication information for indicating the mode of the WUS is 1, which indicates that the first indication information indicates the second mode. As another example, taking the mode of the WUS being indicated by the plurality of bits as an example, a plurality of values of the plurality of bits included in the first indication information for indicating the mode of the WUS are first values, which indicates that the first indication information indicates the first mode; the plurality of values of the plurality of bits included in the first indication information for indicating the mode of the WUS are second values, which indicates that the first indication information indicates the second mode. Herein, the first value and the second value are different. For example, the first value may be 0 and the second value may be a number other than 0, or the first value may be a number other than 0 and the second value may be 0.

In some embodiments, the first indication information being indicated in the implicit manner includes: the first indication information corresponding to a target domain or a target field in a target signaling, where the target domain or the target field is used to configure a parameter related to the second mode. In a case where the target domain or the target field is carried in the target signaling, the first indication information indicates the second mode; and/or, in a case where the target signaling does not carry the target domain or the target field, or the target domain or the target field is not configured with valid parameters related to the second mode, the first indication information indicates the first mode.

In some other embodiments, the first indication information being indicated in the implicit manner includes: the first indication information corresponding to the target domain or the target field in the target signaling, where the target domain or the target field is used to configure a parameter related to the first mode. In a case where the target domain or the target field is carried in the target signaling, the first indication information indicates the first mode; and/or, in a case where the target signaling does not carry the target domain or the target field, or the target domain or the target field is not configured with a valid parameter related to the first mode, the first indication information indicates the second mode.

Optionally, the target signaling may include a signaling carrying the first indication information. Optionally, the target signaling may include at least one of the following: the RRC signaling, the broadcast signaling, a signaling carrying the wireless system message, a signaling carrying the paging message, or a signaling carrying the historical WUS.

Optionally, the target domain or the target field may include a sequence consisting of one or more bits, or may include a sequence consisting of one or more symbols. Optionally, the target domain or the target field may be continuous or non-continuous or partially continuous.

Optionally, information of the target domain or the target field may be used to indicate the parameter related to the second mode or the parameter related to the first mode.

Optionally, in some embodiments, in a case where the target domain or the target field is carried in the target signaling, and the target domain or the target field is used to configure the parameter related to the second mode, the secondary receiver may monitor the WUS based on the parameter related to the second mode. Optionally, in a case where the target signaling does not carry the target domain or the target field, the primary receiver may monitor the WUS based on the pre-configuration information or the configuration information transmitted by the network device.

Optionally, in some other embodiments, in a case where the target domain or the target field is carried in the target signaling, and the target domain or the target field is used to configure the parameter related to the first mode, the primary receiver may monitor the WUS based on the parameter related to the first mode. Optionally, in a case where the target signaling does not carry the target domain or the target field, the secondary receiver may monitor the WUS based on the pre-configuration information or the configuration information transmitted by the network device.

In some embodiments, the parameter related to the second mode includes one or more of the following parameters:
a bandwidth of monitoring the WUS using the second mode;
a frequency of monitoring the WUS using the second mode;
a starting moment of monitoring the WUS using the second mode, and/or a turn-on moment of the secondary receiver;
a duration of monitoring the WUS using the second mode, and/or a turn-on duration of the secondary receiver; and
an ending moment of monitoring the WUS using the second mode, and/or a turn-off moment of the secondary receiver.

Optionally, monitoring the WUS using the second mode may include: the secondary receiver monitoring the WUS. For example, the bandwidth of monitoring the WUS using the second mode may include: a bandwidth of the secondary receiver monitoring the WUS. For example, the frequency of monitoring the WUS using the second mode may include: a frequency of the secondary receiver monitoring the WUS. For example, the starting moment of monitoring the WUS using the second mode may include: a starting moment of the secondary receiver monitoring the WUS. For example, the duration of monitoring the WUS using the second mode may include: a duration of the secondary receiver monitoring the WUS. For example, the ending moment of monitoring the WUS using the second mode may include: an ending moment of the secondary receiver monitoring the WUS.

Optionally, the starting moment of monitoring the WUS using the second mode may be equal to the turn-on moment of the secondary receiver. Optionally, the starting moment of monitoring the WUS using the second mode may be later than the turn-on moment of the secondary receiver.

Optionally, the duration of monitoring the WUS using the second mode may be equal to the turn-on duration of the secondary receiver. Optionally, the duration of monitoring the WUS using the second mode may be shorter than the turn-on duration of the secondary receiver.

Optionally, the ending moment of monitoring the WUS using the second mode may be equal to the turn-off moment of the secondary receiver. Optionally, the ending moment of monitoring the WUS using the second mode may be earlier than the turn-off moment of the secondary receiver.

In some embodiments, the parameter related to the first mode include one or more of the following parameters:
a bandwidth of monitoring the WUS using the first mode;
a frequency of monitoring the WUS using the first mode;
a starting moment of monitoring the WUS using the first mode, and/or a turn-on moment of the primary receiver;
a duration of monitoring the WUS using the first mode, and/or a turn-on duration of the primary receiver; and
an ending moment of monitoring the WUS using the first mode, and/or a turn-off moment of the primary receiver.

Optionally, monitoring the WUS using the first mode may include: the primary receiver monitoring the WUS. For example, the bandwidth of monitoring the WUS using the first mode may include: a bandwidth of the primary receiver monitoring the WUS. For example, the frequency of monitoring the WUS using the first mode may include: a frequency of the primary receiver monitoring the WUS. For example, the starting moment of monitoring the WUS using the first mode may include: a starting moment of the primary receiver monitoring the WUS. For example, the duration of monitoring the WUS using the first mode may include: a duration of the primary receiver monitoring the WUS. For example, the ending moment of monitoring the WUS using the first mode may include: an ending moment of the primary receiver monitoring the WUS.

Optionally, the starting moment of monitoring the WUS using the first mode may be equal to the turn-on moment of the primary receiver. Optionally, the starting moment of monitoring the WUS using the first mode may be later than the turn-on of the primary receiver.

Optionally, the duration of monitoring the WUS using the first mode may be equal to the turn-on duration of the primary receiver. Optionally, the duration of monitoring the WUS using the first mode may be shorter than the turn-on duration of the primary receiver.

Optionally, the ending moment of monitoring the WUS using the first mode may be equal to the turn-off moment of the primary receiver. Optionally, the ending moment of monitoring the WUS using the first mode may be earlier than the turn-off time of the primary receiver.

In some embodiments, the method further includes: switching the mode for monitoring the WUS after monitoring the WUS according to the mode that is determined for a first duration.

Optionally, in a case of switching from the second mode to the first mode, the WUR of the terminal device wakes up the primary receiver of the terminal device, and in a case of waking up the primary receiver of the terminal device, the WUR is turned off, that is, the terminal device falls back to the traditional method of for WUS monitoring.

Optionally, in a case where the terminal device starts to use the first mode or the second mode, the terminal device may configure a timer with a duration of the first duration, and in a case where the timer expires, the terminal device switches the mode for monitoring the WUS. Optionally, the first duration may include a first target duration or a second target duration.

For example, in a case where the terminal device starts to use the first mode to monitor the WUS, the terminal device configures a timer with the duration of the first target duration, and in a case where the timer expires, the terminal device uses the second mode to monitor the WUS. For example, in a case where the timer expires, the terminal device stops using the first mode to monitor the WUS, and uses the second mode to monitor the WUS. Optionally, stopping the first mode and using the second mode may be performed simultaneously, or the second mode may be used first and then the first mode may be stopped.

For example, in a case where the terminal device starts to use the second mode to monitor the WUS, the terminal device configures a timer with the duration of the second target duration, and in a case where the timer expires, the terminal device uses the first mode to monitor the WUS. For example, in a case where the timer expires, the terminal device stops using the second mode to monitor the WUS, and uses the first mode to monitor the WUS. Optionally, stopping the second mode and using the first mode may be performed simultaneously, or the first mode may be used first and then the second mode may be stopped.

Optionally, the first target duration and the second target duration may be the same or different. For example, the first target duration may be greater than, equal to, or less than the second target duration.

Optionally, the first target duration and the second target duration may be pieces of duration determined based on the same configuration information, or may be pieces of duration determined based on different configuration information. The pieces of duration determined based on different configuration information may be the same or different. Optionally, the configuration information may be the pre-configuration information of the terminal device or may be the configuration information transmitted by the network device to the terminal device.

In some embodiments, the method further includes: receiving the second indication information after monitoring the WUS according to the mode that is determined.

Optionally, the second indication information is used to indicate the mode for monitoring the WUS, and the method further includes: maintaining or switching the mode for monitoring the WUS according to the second indication information.

Optionally, the second indication information is used to indicate one or more of the following: stopping, not stopping, switching, or not switching the mode for monitoring the WUS used currently, and the method further includes: stopping/switching/maintaining the mode for monitoring the WUS used currently according to the second indication information.

Optionally, in some embodiments, in a case where the mode indicated by the second indication information and the mode indicated by the first indication information are the same, the mode for monitoring the WUS is maintained, and in a case where the mode indicated by the second indication information and the mode indicated by the first indication information are differet, the mode for monitoring the WUS is switched.

Optionally, the second indication information may be used to indicate the first mode or the second mode.

Optionally, in the case where the first indication information and the second indication information indicate the same mode, the terminal device maintains the mode for monitoring the WUS according to the second indication information. For example, in a case where both the first indication information and the second indication information indicate the first mode, the terminal device maintains the mode for monitoring the WUS based on the first mode according to the second indication information. As another example, in a case where both the first indication information and the second indication information indicate the second mode, the terminal device maintains the mode for monitoring the WUS based on the second mode according to the second indication information.

Optionally, in a case where the first indication information and the second indication information indicate different modes, the terminal device switches the mode for monitoring the WUS according to the second indication information. For example, in a case where the first indication information indicates the first mode and the second indication information indicates the second mode, the terminal device switches the mode for monitoring the WUS according to the second indication information, e.g., switches the first mode to the second mode. As another example, in a case where the first indication information indicates the second mode and the second indication information indicates the first mode, the terminal device switches the mode for monitoring the WUS according to the second indication information, e.g., switches the second mode to the first mode.

Optionally, the second indication information may indicate to maintain the mode for monitoring the WUS, or may indicate to switch the mode for monitoring the WUS.

Optionally, in a case where the second indication information indicates to maintain the mode for monitoring the WUS, the terminal device maintains the mode for monitoring the WUS according to the second indication information. Optionally, in a case where the second indication information indicates to switch the mode for monitoring the WUS, the terminal device switches the mode for monitoring the WUS according to the second indication information.

Optionally, in a case where the second indication information is used to indicate to stop the mode for monitoring the WUS used currently, the terminal device may switch the mode for monitoring the WUS. Optionally, in a case where the second indication information is used to indicate not to stop the mode for monitoring the WUS used currently, the terminal device may maintain the mode for monitoring the WUS used currently. Optionally, in a case where the second indication information is used to indicate to switch the mode for monitoring the WUS used currently, the terminal device may switch the mode for monitoring the WUS. Optionally, in a case where the second indication information is used to indicate not to switch the mode for monitoring the WUS used currently, the terminal device may not switch the mode for monitoring the WUS.

Optionally, the second indication information may be indicated by at least one of the following: an explicit indication, an implicit indication, a direct indication, or an indirect indication. Optionally, the description of the indication manner of the second indication information may be similar to the description of the indication manner of the first indication information, which is not repeated in the embodiments of the present application.

Optionally, the indication manner of the second indication information may be the same as or different from the indication manner of the first indication information. For example, both the second indication information and the first indication information may be indicated in the explicit manner, or the second indication information may be indicated in the implicit manner and the first indication information may be indicated in the explicit manner.

For example, the second indication information is indicated in the explicit manner: the second indication information including one or more bits, where the one or more bits are used to indicate the mode of the WUS.

For example, the second indication information being indicated in the implicit manner includes: the second indication information corresponding to the target domain or the target field in the target signaling, and the target domain or the target field being used to configure the parameter related to the second mode. In a case where the target domain or the target field is carried in the target signaling, the second indication information indicates the second mode; and/or, in a case where the target signaling does not carry the target domain or the target field, or the target domain or the target field is not configured with the valid parameter related to the second mode, the second indication information indicates the first mode.

As yet another example, the second indication information being indicated in the implicit manner includes: the second indication information corresponding to the target domain or the target field in the target signaling, and the target domain or the target field being used to configure the parameter related to the first mode. In a case where the target domain or the target field is carried in the target signaling, the second indication information indicates the first mode; and/or, in a case where the target signaling does not carry the target domain or the target field, or the target domain or the target field is not configured with the valid parameter related to the first mode, the second indication information indicates the second mode.

In some embodiments, switching the mode for monitoring the WUS according to the second indication information includes: switching the mode for monitoring the WUS after receiving the second indication information for a second duration.

Optionally, the second duration may be determined based on the pre-configuration information of the terminal device, or may be determined based on the configuration information transmitted by the network device to the terminal device. Optionally, the second duration may be greater than or equal to a switching processing duration. Optionally, the second duration may be determined based on a subcarrier spacing.

Optionally, at an ending moment of receiving the second indication information, the terminal device may start a timer with a duration of the second duration. In a case where the timer expires, the terminal device switches the mode for monitoring the WUS.

Optionally, during a time period corresponding to the second duration, there may be a partial time period in which both the first mode and the second mode are used to monitor the mode of the WUS. Optionally, during the time period corresponding to the second duration, the terminal device may turn off the primary receiver and turn on the secondary receiver simultaneously, or the secondary receiver may be turned on first and then the primary receiver is turned off. Alternatively, during the time period corresponding to the second duration, the terminal device may turn off the secondary receiver and turn on the primary receiver simultaneously, or the primary receiver may be turned on first and then the secondary receiver is turned off.

In some embodiments, the second indication information is carried by at least one of the following: system information, a paging message, a physical downlink control channel (PDCCH) for scheduling the paging message, a physical downlink shared channel (PDSCH) for carrying the paging message, the WUS, or an independent signaling.

In some embodiments, the terminal device determines the mode for monitoring the WUS based on the received second indication information. For example, based on the received second indication information, the terminal device determines the mode for monitoring the WUS after the ending moment of receiving the second indication information.

Optionally, the second indication information may also be specifically used to indicate the first mode or the second mode. Optionally, the terminal device may receive the second indication information in the RRC _CONNECTED state. Optionally, in some other embodiments, the terminal device may receive the second indication information in the RRC_IDLE state or the RRC_INACTIVE state.

Optionally, the second indication information may also be carried by one or more of the following: the RRC signaling, the broadcast signaling, the wireless system message, the paging message, and the historical WUS.

Optionally, the second indication information may be received by the primary receiver, or the second indication information may be received by the secondary receiver.

Optionally, the second indication information and the first indication information may be carried by the same signaling or different signalings. Optionally, the second indication information and the first indication information may be received by the same receiver, or may be received by different receivers.

In some embodiments, the second indication information is received by the primary receiver of the terminal device, or the second indication information is received by the secondary receiver of the terminal device.

Optionally, in a case where the first indication information indicates to use the first mode to monitor the WUS, or in a case where the terminal device currently uses the primary receiver to monitor the WUS, the second indication information is received by the primary receiver of the terminal device.

Optionally, in a case where the first indication information indicates to use the second mode to monitor the WUS, or in a case where the terminal device currently uses the secondary receiver to monitor the WUS, the second indication information is received by the secondary receiver of the terminal device.

The above describes that in a case where the first indication information and/or the second indication information are transmitted by the network device, the terminal device determines the mode for monitoring the WUS, the embodiments of the present application are not limited thereto. The terminal device may also determine the mode for monitoring the WUS based on a radio resource management (RRM) measurement result. It should be noted that determining the mode for monitoring the WUS through the first indication information and/or the second indication information does not conflict with determining the mode for monitoring the WUS through the RRM measurement result. For example, in some embodiments, the mode for monitoring the WUS is determined to be the first mode through the first indication information and/or the second indication information, and the mode for monitoring the WUS is also determined to be the first mode through the RRM measurement result, then the terminal device uses the first mode to monitor the WUS. In other embodiments, the mode for monitoring the WUS is determined to be the second mode through the first indication information and/or the second indication information, and the mode for monitoring the WUS is also determined to be the second mode through the RRM measurement result, then the terminal device uses the second mode to monitor the WUS. In some other embodiments, the mode for monitoring the WUS is determined to be the first mode through the first indication information and/or the second indication information, and the mode for monitoring the WUS is determined to be the second mode by the RRM measurement result, then the terminal device uses the first mode or the second mode to monitor the WUS. In some further embodiments, the mode for monitoring the WUS is determined to be the second mode by the first indication information and/or the second indication information, and the mode for monitoring the WUS is determined to be the first mode by the RRM measurement result, then the terminal device uses the first mode or the second mode to monitor the WUS.

Optionally, the terminal device may determine priorities of monitoring in the first mode and the second mode according to the pre-configuration information and/or the configuration information transmitted by the network device, or determine that a priority of the mode for monitoring is determined through the indication information and the RRM measurement information. In a case where the modes for monitoring determined by the indication information and the RRM measurement information are different, the modes for monitoring the WUS is determined based on the priorities.

In some embodiments, the method further includes: obtaining, by the terminal device, the radio resource management (RRM) measurement result of a current cell.

In some embodiments, determining the mode for monitoring the wake-up signal (WUS) includes: in a case where the RRM measurement result is less than and/or equal to a first threshold, determining the mode for monitoring the WUS as the first mode.

Optionally, the first threshold may be associated based on parameter information of the secondary receiver (e.g., WUR), or the first threshold may be determined based on the parameter information of the secondary receiver. The parameter information of the WUR may include at least one of the following: a receiving performance of the secondary receiver, receiving sensitivities of the secondary receiver with different distances, receiving accuracies of the secondary receiver with different distances, or the like.

Optionally, the receiving performance of the secondary receiver may be less than or equal to a receiving performance of the primary receiver, and/or the receiving sensitivities of the secondary receiver with different distances may be less than or equal to receiving sensitivities of the primary receiver with different distances, and/or the receiving accuracies of the secondary receiver with different distances may be less than or equal to receiving accuracies of the primary receiver with different distances.

Optionally, the terminal device may receive one or more measurement parameters transmitted by the network device, perform the RRM measurement based on the one or more measurement parameters, and obtain the RRM measurement result. Optionally, the terminal device may perform the RRM measurement based on one or more preset measurement parameters to obtain the RRM measurement result. Optionally, the one or more measurement parameters may indicate at least one of the following: a received signal strength indication (RSSI), a reference signal received power (RSRP), a reference signal received quality (RSRQ), or a signal to interference plus noise ratio (SINR).

Optionally, the RRM measurement result may include at least one of the following: the RSSI, the RSRP, the RSRQ, or the SINR.

Optionally, the RRM measurement result is obtained by measuring a reference signal carried in the WUS, or the RRM measurement result is obtained by measuring a reference signal carried in a signal other than the WUS.

Optionally, the reference signal may include at least one of the following: a synchronization signal block (SSB), or channel state information-reference signals (CSI-RS). Optionally, the reference signal includes a specific sequence signal. Optionally, the specific sequence signal may include a preamble and/or a reference signal. Optionally, in a case where the primary receiver of the terminal device receives and monitors the WUS, the reference signal includes at least one of the following: SSB, or CSI-RS. Optionally, in a case where the secondary receiver of the terminal device receives and monitors the WUS, the reference signal includes the specific sequence signal.

Optionally, in a case where the RRM measurement result is less than and/or equal to the first threshold, determining the mode for monitoring the WUS as the first mode may include: in a case where the RRM measurement result includes one measurement result, and the one measurement result is less than and/or equal to the first threshold, determining the mode for monitoring the WUS as the first mode.

In some other embodiments, in a case where the RRM measurement result is less than and/or equal to the first threshold, determining the mode for monitoring the WUS as the first mode may include: in a case where the RRM measurement result includes multiple measurement results, and at least one measurement result of the multiple measurement results is less than or equal to at least one first threshold corresponding to the at least one measurement result respectively, determining the mode for monitoring the WUS as the first mode.

Optionally, the multiple measurement results may include the RSRP and the RSRQ, and multiple first thresholds corresponding to the multiple measurement results respectively may include: a first threshold corresponding to the RSRP and a first threshold corresponding to the RSRQ.

Optionally, in a case where the RRM measurement result is less than and/or equal to the first threshold, a current channel quality is poor and a sensitivity of the secondary receiver is low, causing the secondary receiver to fail to work normally. Therefore, it is necessary to monitor the WUS via the first mode.

Optionally, the first threshold may be determined based on the pre-configuration information, or determined based on the configuration information transmitted by the network device.

In some embodiments, determining the mode for monitoring the wake-up signal (WUS) includes:
in a case where the RRM measurement result is greater than and/or equal to the first threshold, determining the mode for monitoring the WUS as the second mode.

Optionally, in a case where the RRM measurement result is greater than and/or equal to the first threshold, determining the mode for monitoring the WUS as the second mode may include: in a case where the RRM measurement result includes one measurement result, and the one measurement result is greater than and/or equal to the first threshold, determining the mode for monitoring the WUS as the second mode.

In some other embodiments, in a case where the RRM measurement result is greater than and/or equal to the first threshold, determining the mode for monitoring the WUS as the second mode may include: in a case where the RRM measurement result includes the multiple measurement results, and the multiple measurement results are all greater than and/or equal to the multiple first thresholds corresponding to the multiple measurement results respectively, determining the mode for monitoring the WUS as the second mode.

In this way, if the RRM measurement result is greater than and/or equal to the first threshold, it means that the current channel quality is good enough and the secondary receiver can also work normally with the corresponding sensitivity of the secondary receiver.

Optionally, the RRM measurement result being greater than and/or equal to the first threshold is a prerequisite for using the second mode or performing the reception by the secondary receiver. On this basis, there may be some special scenarios that are still not suitable for performing the reception by the secondary receiver, which will be illustrated by examples later in the specification.

In some embodiments, determining the mode for monitoring the wake-up signal (WUS) includes:
in a case where the RRM measurement result is greater than and/or equal to a second threshold, determining the mode for monitoring the WUS as the second mode; where the second threshold is greater than the first threshold.

Optionally, the second threshold may be determined based on a neighboring cell measurement starting threshold. Optionally, the neighboring cell measurement starting threshold may include at least one of the following: an intra-frequency measurement starting threshold (SIntraSearch) or an inter-frequency measurement starting threshold (Sintersearch). For example, the neighboring cell measurement starting threshold may include at least one of the following: the intra-frequency measurement starting threshold. Optionally, the intra-frequency measurement starting threshold may include at least one of the following: an RSRP intra-frequency measurement starting threshold (SIntraSearchP), or an RSRQ intra-frequency measurement starting threshold (SIntraSearchP). Optionally, the inter-frequency measurement starting threshold may include at least one of the following: an RSRP inter-frequency measurement starting threshold (SintersearchP), or an RSRQ inter-frequency measurement starting threshold (SintersearchQ). Herein, the intra-frequency measurement starting threshold is a threshold parameter used to determine whether to perform intra-frequency cell reselection, and the inter-frequency measurement starting threshold is a threshold parameter used to determine whether to perform inter-frequency cell reselection.

Optionally, the second threshold and/or the neighboring cell measurement starting threshold may be determined based on the pre-configuration information, or may be determined by the configuration information transmitted by the network device.

Optionally, the second threshold is the intra-frequency measurement starting threshold. In this way, in a case where the RSRP of the serving cell is less than the RSRP intra-frequency measurement starting threshold, and/or the RSRQ of the serving cell is less than the RSRQ intra-frequency measurement starting threshold, the intra-frequency neighboring cell measurement is started. Optionally, the second threshold is the inter-frequency measurement starting threshold. In this way, in a case where the RSRP of the serving cell is less than the RSRP inter-frequency measurement starting threshold, and/or the RSRQ of the serving cell is less than the RSRQ inter-frequency measurement starting threshold, the inter-frequency neighboring cell measurement is started.

Optionally, in a case where the RRM measurement result is greater than and/or equal to the second threshold, determining the mode for monitoring the WUS as the second mode may include: in a case where the RRM measurement result includes one measurement result, and the one measurement result is greater than and/or equal to the second threshold, determining the mode for monitoring the WUS as the second mode.

Optionally, in a case where the RRM measurement result is greater than and/or equal to the second threshold, determining the mode for monitoring the WUS as the second mode may include: in a case where the RRM measurement result includes multiple measurement results, and the multiple measurement results are all greater than and/or equal to the multiple second thresholds corresponding to the multiple measurement results respectively, determining the mode for monitoring the WUS as the second mode.

Optionally, the multiple measurement results may include the RSRP and the RSRQ, and the multiple second thresholds corresponding to the multiple measurement results respectively may include: a second threshold corresponding to the RSRP and a second threshold corresponding to the RSRQ.

In some embodiments, determining the mode for monitoring the wake-up signal (WUS) includes: in a case where the RRM measurement result is less than and/or equal to the second threshold, determining the mode for monitoring the WUS as the first mode; where the second threshold is greater than the first threshold.

Optionally, in a case where the RRM measurement result is less than and/or equal to the second threshold, determining the mode for monitoring the WUS as the first mode may include: in a case where the RRM measurement result includes one measurement result, and the one measurement result is less than and/or equal to the second threshold, determining the mode for monitoring the WUS as the first mode.

Optionally, in a case where the RRM measurement result is less than and/or equal to the second threshold, determining the mode for monitoring the WUS as the first mode may include: in a case where the RRM measurement result includes the multiple measurement results, and at least one measurement result of the multiple measurement results is less than or equal to at least one second threshold corresponding to the at least one measurement result respectively, determining the mode for monitoring the WUS as the first mode.

Optionally, in a case where the RRM measurement result is less than and/or equal to the second threshold and greater than the first threshold, the first mode or the second mode may be used to monitor the WUS. For example, in a case where the RRM measurement result is less than and/or equal to the second threshold and greater than the first threshold, the first mode is used to monitor the WUS. As another example, in a case where the RRM measurement result is less than and/or equal to the second threshold and greater than the first threshold, the second mode is used to monitor the WUS. In some other embodiments, it may be determined whether to use the first mode or the second mode to monitor the WUS based on the priorities of the first mode and the second mode.

In some embodiments, the second threshold is the neighboring cell measurement starting threshold; or, the second threshold is a sum of the neighboring cell measurement starting threshold and a bias value.

Optionally, the second threshold may include SIntraSearchP and SintraSearchQ.

Optionally, in a case where the RRM measurement result is obtained by the primary receiver, the second threshold is the sum of the neighboring cell measurement starting threshold and a first bias value. For example, in a case where Srxlev and Squal (the RSRP value and the RSRQ value, respectively) are obtained by measuring by the primary receiver based on a traditional reference signal (SSB, or CSI-RS), corresponding thresholds SIntraSearchP and SIntraSearchQ may be used, or an appropriate bias may be added thereto (SIntraSearchP+RRSP_delta1 and SIntraSearchQ+RSRQ_delta1).

Optionally, in a case where the RRM measurement result is obtained by the WUR, the second threshold is a sum of the neighboring cell measurement starting threshold and a second bias value. For example, in a case where Srxlev and Squal (the RSRP value and the RSRQ value, respectively) are obtained by measuring by the WUR based on a new reference signal (e.g., a specific sequence signal) that is able to be received by the WUR, the above-mentioned thresholds SIntraSearchP and SIntraSearchQ may be used, or considering that an RRM measurement error based on the WUR may be larger than an RRM measurement error based on the primary receiver, an appropriate bias may be added (i.e., SIntraSearchP+RRSP_delta2, and SIntraSearchQ+RSRP_delta2).

Optionally, the first bias value and the second bias value may be the same or different. Optionally, the first bias value and/or the second bias value may be determined based on the pre-configuration information, or may be determined based on the configuration information transmitted by the network device to the terminal device.

In some embodiments, obtaining, by the terminal device, the radio resource management (RRM) measurement result of the current cell includes: obtaining, by the primary receiver of the terminal device, the RRM measurement result. In some other embodiments, the secondary receiver of the terminal device obtains the RRM measurement result.

Optionally, in a case where the terminal device currently uses the first mode to monitor the WUS, the primary receiver of the terminal device obtains the RRM measurement result. Optionally, in a case where the terminal device currently uses the second mode to monitor the WUS, the secondary receiver of the terminal device obtains the RRM measurement result. Optionally, in a case where the terminal device currently uses the second mode to monitor the WUS, and the secondary receiver supports the RRM measurement, the secondary receiver of the terminal device obtains the RRM measurement result.

In some embodiments, the RRM measurement result obtained by the primary receiver of the terminal device includes at least one of the following: a received signal strength indication (RSSI), a reference signal received power (RSRP), a reference signal received quality (RSRQ), or a signal to interference plus noise ratio (SINR).

In some other embodiments, obtaining, by the secondary receiver of the terminal device, the RRM measurement result includes: determining, by the secondary receiver of the terminal device, the RRM measurement result based on a preamble and/or a reference signal included in the WUS, or a reference signal other than the WUS received by the secondary receiver.

In some embodiments, the secondary receiver supports an RRM measurement function.

In some embodiments, the secondary receiver can obtain the RRM measurement result only in a case where the secondary receiver supports the RRM measurement function, and then the secondary receiver determines the mode for monitoring the WUS based on the measurement result. Optionally, the secondary receiver can obtain the RRM measurement result only in a case where the secondary receiver supports the RRM measurement function and the mode in which the terminal device monitors the WUS is the second mode, or in other words, the secondary receiver is turned on. Optionally, in a case where the secondary receiver obtains the RRM measurement result, the secondary receiver may determine the mode for monitoring the WUS based on the RRM measurement result and the first threshold and/or the second threshold.

Optionally, the secondary receiver supporting the RRM measurement function may be pre-configured by the secondary receiver of the terminal device, or may be determined according to the pre-configuration information or the configuration information transmitted by the network device.

In some embodiments, the mode that is determined for monitoring the WUS is the second mode, and the method further includes: performing the RRM measurement by the secondary receiver.

Optionally, in a case where the mode for monitoring the WUS is the second mode, the secondary receiver of the terminal device monitors the WUS and performs the RRM measurement.

Optionally, in any embodiment of the present application, the RRM measurement is performed by the secondary receiver, and the RRM measurement result may be obtained by the secondary receiver of the terminal device, or the RRM measurement work for the serving cell may be performed by the secondary receiver. In this case, the primary receiver may be turned off, that is, the primary receiver does not perform the RRM measurement, or the RRM measurement work for the serving cell and the neighboring cell may be performed by the secondary receiver. In this case, the primary receiver may be turned off.

For example, if the RRM measurement result is greater than and/or equal to the second threshold, the mode for monitoring the WUS is determined as the second mode, and the second threshold is the neighboring cell measurement starting threshold; or, the second threshold is the sum of the neighboring cell measurement starting threshold and the bias value, so that the secondary receiver of the terminal device can obtain the RRM measurement result of the serving cell.

Optionally, in any embodiment of the present application, the secondary receiver may only have the RRM measurement function for measuring the serving cell, or the secondary receiver may have the RRM measurement function for measuring the serving cell and the RRM measurement function for measuring the neighboring cell.

In some embodiments, the secondary receiver does not support the RRM measurement function, so the secondary receiver cannot be used to perform the RRM measurement in any case, that is, the terminal device may perform the RRM measurement by the primary receiver. Thus, in some embodiments, the terminal device may keep the primary receiver always on so that the primary receiver continuously performs the RRM measurement and monitors the WUS. In some other implementations, the terminal device may enable the primary receiver to be turned on or off periodically or non-periodically, so that in a case where the primary receiver is turned on, the primary receiver can perform the RRM measurement and monitor the WUS, and in a case where the primary receiver is turned off, the secondary receiver is turned on accordingly, and in a case where the secondary receiver is turned on, the secondary receiver can monitor the WUS, but the secondary receiver that does not support the RRM measurement function cannot perform the RRM measurement.

In some embodiments, the secondary receiver does not support the RRM measurement function; determining the mode for monitoring the wake-up signal (WUS) includes: in a case where the RRM measurement result is greater than and/or equal to the second threshold, the terminal device uses the second mode to monitor the WUS; the method also includes: performing the RRM measurement by the primary receiver.

Optionally, in a case where the secondary receiver does not support the RRM measurement, the primary receiver is required to perform the measurement. For example, in a case where the RRM measurement result is greater than and/or equal to the second threshold and only the serving cell needs to be measured, or there are other cases where the serving cell and/or neighboring cell need to be measured, the primary receiver must be turned on. In a case where the primary receiver is turned on, there is no need to turn on the secondary receiver to receive the WUS additionally, that is, in a case where the primary receiver is turned on, the secondary receiver may be turned off.

In some embodiments, the secondary receiver does not support the RRM measurement function, and the method further includes: performing the RRM measurement by the primary receiver.

In some implementation scenarios, even if the secondary receiver does not support the RRM measurement function, in a case where the RRM measurement result obtained by the primary receiver is greater than and/or equal to the second threshold, it indicates that the current channel quality is good enough. At this time, the RRM measurement may not be performed for a time period, or the RRM measurement may be performed once every one or more RRM measurement cycles. At this time, the primary receiver may be turned off and the secondary receiver may be turned on so that the secondary receiver monitors the WUS. In a case where the primary receiver needs to work, the working mode is switched to turn on the primary receiver and turn off the secondary receiver. Optionally, the time period during which the RRM measurement is not performed may be determined by the terminal device based on the pre-configuration information, or may be determined based on the configuration information transmitted by the network device.

In some embodiments, in a case where the WUR of the terminal device does not support the RRM measurement, monitoring, by the terminal device, the WUS using the second mode, includes:
in a case where the WUR of the terminal device does not support the RRM measurement, performing, by the terminal device, the RRM measurement in a target measurement cycle in every K measurement cycles and monitoring, by the terminal device, the WUS using the first mode. The K is greater than or equal to 2. The target measurement cycle is shorter than K measurement cycles. For example, the target measurement cycle may be a first measurement cycle, a second measurement cycle, or the last measurement cycle of the K measurement cycles.

In some embodiments, the method further includes: monitoring, by the terminal device, in a measurement cycle other than the target measurement cycle in each of the K measurement cycles, the WUS using the second mode. At this time, the terminal device may not perform the measurement.

Optionally, the K and/or the target measurement cycle(s) may be determined by the terminal device according to the pre-configuration information, or may be determined according to the configuration information transmitted by the network device to the terminal device.

In some embodiments, determining the mode for monitoring the wake-up signal (WUS) includes: determining the mode for monitoring the WUS according to a situation about whether the terminal device meets a relaxed measurement condition.

Optionally, the relaxed measurement condition may be a condition for reducing an RRC measurement cycle, or a condition for reducing a number of RRC measurements.

In some embodiments, in a case where the secondary receiver does not support the RRM measurement function, the terminal device determines whether the relaxed measurement condition is met, thereby determining the mode for monitoring the WUS. Optionally, in some other embodiments, in a case where the secondary receiver supports the RRM measurement function, the terminal device determines whether the relaxed measurement condition is met, thereby determining the mode for monitoring the WUS.

In some embodiments, in a case where the terminal device meets the relaxed measurement condition, the mode for monitoring the WUS is determined as the second mode; and/or, in a case where the terminal device does not meet the relaxed measurement condition, the mode for monitoring the WUS is determined as the first mode.

Optionally, in a case where the terminal device meets the relaxed measurement condition, the secondary receiver is used to monitor the WUS, so that the RRC measurement is no longer performed or the RRC measurement is not performed within a specific time period. For example, after the secondary receiver monitors the WUS for a specific time period, the primary receiver is switched to be turned on and the primary receiver is used to perform the RRC measurement and monitor the WUS.

Optionally, in a case where the terminal device does not meet the relaxed measurement condition, the primary receiver is always used to monitor the WUS, and the primary receiver may continue to perform the RRC measurement until a certain time unit in which the terminal device meets the relaxed measurement condition being determined, and the secondary receiver is used to monitor the WUS.

Optionally, in some embodiments, in a case where the terminal device meets the relaxed measurement condition, the terminal device performs the RRM measurement in the target measurement cycle in every K measurement cycles and uses the first mode to monitor the WUS, and/or the terminal device uses the second mode to monitor the WUS in a measurement cycle other than the target measurement cycle in every K measurement cycles. Optionally, in some other embodiments, in a case where the terminal device does not meet the relaxed measurement condition, the terminal device performs the RRC measurement in each measurement cycle and uses the first mode to monitor the WUS.

In the embodiments of the present application, in a case where the terminal device meets the relaxed measurement condition, the secondary receiver is used to monitor the WUS, otherwise the primary receiver is used to monitor the WUS, thereby reducing the power consumption of the terminal device while meeting measurement requirements.

In some embodiments, the method further includes: obtaining, by the terminal device, the RRM measurement result of the current cell; in a case where the RRM measurement result is greater than and/or equal to a third threshold, the terminal device meeting the relaxed measurement condition, where the third threshold is greater than the second threshold.

Optionally, the second threshold is the neighboring cell measurement starting threshold; or, the second threshold is the sum of the neighboring cell measurement starting threshold and the bias value. Optionally, the third threshold may be determined by the terminal device based on the pre-configuration information, or may be determined based on the configuration information transmitted by the network device to the terminal device.

Optionally, in some other embodiments, the third threshold may be less than or equal to the second threshold. Optionally, in some other embodiments, the third threshold may be less than or equal to the first threshold.

Optionally, the terminal device meeting the relaxed measurement condition includes: the terminal device meeting the relaxed measurement condition of the serving cell. Optionally, in some other embodiments, the terminal device meeting the relaxed measurement condition includes: the terminal device meeting the relaxed measurement condition of the neighboring cell.

Optionally, in a case where the RRM measurement result includes one measurement result, and the one measurement result is greater than and/or equal to the third threshold, the terminal device meets the relaxed measurement condition.

Optionally, in a case where the RRM measurement result includes the multiple measurement results, and the multiple measurement results are all greater than and/or equal to multiple third thresholds corresponding to the multiple measurement results respectively, the terminal device meets the relaxed measurement condition.

In some embodiments, the method further includes: obtaining, by the terminal device, the RRM measurement result of the current cell. If the RRM measurement result is less than and/or equal to the third threshold, the terminal device does not meet the relaxed measurement condition.

Optionally, in a case where the RRM measurement result includes one measurement result, and the one measurement result is less than and/or equal to the third threshold, the terminal device does not meet the relaxed measurement condition.

Optionally, in a case where the RRM measurement result includes the multiple measurement results, and at least one measurement result of the multiple measurement results is less than and/or equal to at least one third threshold corresponding to the at least one measurement result respectively, the terminal device does not meet the relaxed measurement condition.

Optionally, the multiple measurement results may include the RSRP and the RSRQ, and multiple third thresholds corresponding to the multiple measurement results may include: a third threshold corresponding to the RSRP and a third threshold corresponding to the RSRQ.

In some embodiments, the method further includes: determining a current motion speed information of the terminal device; in a case where the motion speed information meets a fourth threshold, the terminal device meeting the relaxed measurement condition.

Optionally, the motion speed information may indicate how fast the terminal device is moving. Optionally, the motion speed information may be a distance moved by the terminal device within a preset time period, or the motion speed information may be a time taken to move for a preset distance, or the motion speed information may be a distance moved by the terminal device within a time period in unit, or the motion speed information may be other parameters that may indicate a speed when the terminal is moving. The motion speed information may include at least one of maximum speed information, average speed information, current speed information, or the like.

Optionally, the current motion speed information of the terminal device may be determined by the terminal device itself, or may be transmitted to the terminal device by other terminal devices, or may be transmitted to the terminal device by the network device.

Optionally, other parameters that may indicate the speed when the terminal is moving may include a variation of the RRM measurement result. For example, the variation of the RRM measurement result may include at least one of the following: a variation of the RSSI, a variation of the RSRP, a variation of the RSRQ, or a variation of the SINR. For example, during a preset time period or a time period in unit, in a case where the variation of the RSRP is less than or equal to a fourth threshold corresponding to the RSRP, and/or the variation of the RSRQ is less than or equal to a fourth threshold corresponding to the RSRQ, then the terminal device meets the relaxed measurement condition; otherwise, the relaxed measurement condition is not met.

In some embodiments, the method further includes: in a case where the motion speed information does not meet the fourth threshold, the terminal device not meeting the relaxed measurement condition.

Optionally, in a case where the motion speed information is a distance, the motion speed information meeting the fourth threshold may include that the distance is less than and/or equal to the fourth threshold; and/or the motion speed information not meeting the fourth threshold may include that the distance is greater than and/or equal to the fourth threshold.

Optionally, in a case where the motion speed information is a duration, the motion speeding information meeting the fourth threshold may include that the duration is greater than and/or equal to the fourth threshold; and/or the motion speed information not meeting the fourth threshold may include that the duration is less than and/or equal to the fourth threshold.

Optionally, in a case where the motion speed information is the variation of the RRM measurement result, the motion speed information meeting the fourth threshold may include that the variation of the RRM measurement result is less than and/or equal to the fourth threshold, and/or the motion speed information not meeting the fourth threshold may include that the variation of the RRM measurement result is greater than and/or equal to the fourth threshold.

FIG. 7 is yet another schematic flowchart of a communication method provided in the embodiments of the present application. As shown in FIG. 7, the method is applied to a network device, and the method includes:
S701, determining a mode for transmitting a wake-up signal (WUS), where the mode for transmitting the WUS includes a third mode and a fourth mode; and
S702, transmitting the WUS according to the mode that is determined.

Optionally, in a case where the mode for transmitting the WUS by the network device is the third mode, the mode for monitoring the WUS by a corresponding terminal device is a first mode. Optionally, in a case where the mode for transmitting the WUS by the network device is the fourth mode, the mode for monitoring the WUS by the corresponding terminal device is a second mode.

In some embodiments, the third mode is used to indicate a mode for receiving the transmitted WUS by a primary receiver of a terminal device; and the fourth mode is used to indicate a mode for receiving the transmitted WUS by a secondary receiver of the terminal device.

In some embodiments, transmitting the WUS according to the mode that is determined includes:
in a case where the mode that is determined is the third mode, transmititing, by the network device, the WUS for receiving by the primary receiver; and
in a case where the mode that is determined is the fourth mode, transmitting, by the network device, the WUS for receiving by the secondary receiver.

In some embodiments, in a case where the mode that is determined is the third mode, the network device stops transmitting the WUS for receiving by the secondary receiver;
and/or,
in a case where the mode that is determined is the fourth mode, the network device stops transmitting the WUS for receiving by the primary receiver.

In some embodiments, a modulation manner of the WUS for receiving by the secondary receiver is simpler than a modulation manner of the WUS for receiving by the primary receiver; and/or,
a modulation waveform of the WUS for receiving by the secondary receiver is simpler than a modulation waveform of the WUS for receiving by the primary receiver; and/or,
a transmission rate of the WUS for receiving by the secondary receiver is lower than a transmission rate of the WUS for receiving by the primary receiver; and/or,
a bandwidth of the WUS for receiving by the secondary receiver is narrower than a bandwidth of the WUS for receiving by the primary receiver; and/or,
a bit rate of the WUS for receiving by the secondary receiver is lower than a bit rate of the WUS for receiving by the primary receiver.

In some embodiments, the WUS for receiving by the secondary receiver is different from the WUS for receiving by the primary receiver in at least one of the following: the modulation manner, the modulation waveform, a corresponding frequency resource, the transmission rate, the bandwidth, or the bit rate.

In some embodiments, the method further includes:
transmitting, by the network device, first indication information, where the first indication information is used to indicate the mode for monitoring the WUS;
where in a case where the mode that is determined is the third mode, the mode for monitoring the WUS is the first mode; and/or, in a case where the mode that is determined is the fourth mode, the mode for monitoring the WUS is the second mode.

In some embodiments, the first indication information is specifically used to indicate the first mode.

In some embodiments, the first indication information is carried by one or more of the following:
a RRC signaling, a broadcast signaling, a wireless system message, a paging message, and a historical WUS.

In some embodiments, the first indication information is used for a reception performed by the secondary receiver of the terminal device, and/or the first indication information is used for a reception performed by the primary receiver of the terminal device.

In some embodiments, the first indication information is specifically used to indicate the second mode.

In some embodiments, the first indication information is carried by one or more of the following:
the RRC signaling, the broadcast signaling, the wireless system message, the paging message, and the historical WUS.

In some embodiments, the first indication information is used for the reception performed by the primary receiver of the terminal device.

In some embodiments, the first indication information is indicated in an explicit manner, and/or the first indication information is indicated in an implicit manner.

In some embodiments, the first indication information being indicated in the explicit manner includes:
the first indication information including one or more bits, where the one or more bits are used to indicate a mode of the WUS.

In some embodiments, the first indication information being indicated in the implicit manner includes:
that the first indication information corresponding to a target domain or a target field in a target signaling, where the target domain or the target field is used to configure a parameter related to the second mode;
in a case where the target domain or the target field is carried in the target signaling, the first indication information indicating the second mode; and/or,
in a case where the target signaling does not carry the target domain or the target field, or the target domain or the target field is not configured with a valid parameter related to the second mode, the first indication information indicating the first mode.

In some embodiments, the parameter related to the second mode includes one or more of the following parameters:
a bandwidth of monitoring the WUS using the second mode;
a frequency of monitoring the WUS using the second mode;
a starting moment of monitoring the WUS using the second mode, and/or a turn-on moment of the secondary receiver;
a duration of monitoring the WUS using the second mode, and/or a turn-on duration of the secondary receiver; and
an ending moment of monitoring the WUS using the second mode, and/or a turn-off moment of the secondary receiver.

In some embodiments, the method further includes:
switching the mode for transmitting the WUS after transmitting the WUS according to the mode that is determined for a first duration.

In some embodiments, the method further includes:
transmitting the second indication information after transmitting the WUS according to the mode that is determined;
where the second indication information is used to indicate the mode for monitoring the WUS, and the method further includes: maintaining or switching the mode for transmitting the WUS according to the second indication information; and/or,
the second indication information is used to indicate one or more of the following: stopping, not stopping, switching, or not switching the mode for monitoring the WUS used currently, the method also includes: stopping/switching/maintaining the mode for transmitting the WUS used currently according to the second indication information.

In some embodiments, switching the mode for transmitting the WUS according to the second indication information includes:
switching the mode for transmitting the WUS after transmitting the second indication information for a second duration.

In some embodiments, the second indication information is carried by at least one of the following:
system information, the paging message, a physical downlink control channel (PDCCH) for scheduling the paging message, a physical downlink shared channel (PDSCH) for carrying the paging message, the WUS, or an independent signaling.

In some embodiments, the second indication information is used for receiving by the primary receiver of the terminal device, or the second indication information is used for receiving by the secondary receiver of the terminal device.

In some embodiments, the method further includes: receiving, by the network device, a radio resource management (RRM) measurement result of a current cell.

In some embodiments, determining the mode for transmitting the wake-up signal (WUS) includes:
in a case where the RRM measurement result is less than and/or equal to a first threshold, determining the mode for transmitting the WUS as the third mode.

In some embodiments, determining the mode for transmitting the wake-up signal (WUS) includes:
in a case where the RRM measurement result is greater than and/or equal to the first threshold, determineing the mode for transmitting the WUS as the fourth mode.

In some embodiments, determining the mode for transmitting the wake-up signal (WUS) includes:
in a case where the RRM measurement result is greater than and/or equal to a second threshold, determining the mode for transmitting the WUS as the fourth mode; where the second threshold is greater than the first threshold.

In some embodiments, determining the mode for transmitting the wake-up signal (WUS) includes:
in a case where the RRM measurement result is less than and/or equal to the second threshold, determining the mode for transmitting the WUS as the third mode; where the second threshold is greater than the first threshold.

In some embodiments, the second threshold is a neighboring cell measurement starting threshold; or,
the second threshold is a sum of the neighboring cell measurement starting threshold and a bias value.

In some embodiments, receiving, by the network device, the radio resource management (RRM) measurement result of the current cell, includes:
receiving, by the network device, the RRM measurement result transmitted by the primary receiver of the terminal device, or receiving, by the network device, the RRM measurement result transmitted by the secondary receiver of the terminal device.

In some embodiments, the RRM measurement result obtained by the primary receiver of the terminal device includes at least one of the following: a received signal strength indication (RSSI), a reference signal received power (RSRP), a reference signal received quality (RSRQ), or a signal to interference plus noise ratio (SINR); or,
a preamble and/or reference signal included in the WUS is used for the secondary receiver to determine the RRM measurement result, or the method further includes: transmitting, by the network device, a reference signal other than the WUS to the secondary receiver, where the reference signal other than the WUS is used for the secondary receiver to determine the RRM measurement result.

In some embodiments, the secondary receiver of the terminal device supports an RRM measurement function.

In some embodiments, the mode that is determined for transmitting the WUS is the third mode, and the method further includes:
receiving the RRM measurement result transmitted by the secondary receiver.

In some embodiments, the secondary receiver of the terminal device does not support the RRM measurement function.

Determining the mode for transmitting the wake-up signal (WUS) includes:
in a case where the RRM measurement result is greater than and/or equal to the second threshold, transmitting, by the network device, the WUS using the fourth mode;

Receiving, by the network device, the radio resource management (RRM) measurement result of the current cell includes: receiving, by the network device, the RRM measurement result transmitted by the primary receiver.

In some embodiments, determining the mode for transmitting the wake-up signal (WUS) includes:
determining the mode for transmitting the WUS according to a situation about whether the terminal device meets a relaxed measurement condition.

In some embodiments, determining the mode for transmitting the WUS according to the situation about whether the terminal device meets the relaxed measurement condition includes:
in a case where the terminal device meets the relaxed measurement condition, determining the mode for transmitting the WUS as the fourth mode; and/or,
in a case where the terminal device does not meet the relaxed measurement condition, determining the mode for transmitting the WUS as the third mode.

In some embodiments, the method further includes:
receiving, by the network device, the RRM measurement result of the current cell; and
in a case where the RRM measurement result is greater than and/or equal to a third threshold, the terminal device meeting the relaxed measurement condition, where the third threshold is greater than the second threshold.

In some embodiments, the method further includes:
determining a current motion speed information of the terminal device; and
in a case where the motion speed information meets the fourth threshold, the terminal device meeting the relaxed measurement condition.

In some embodiments, the fourth threshold is predefined, or configured by the network device through one of the following: the system information, the RRC signaling, or a media access control control element (MAC CE) signaling.

In some embodiments, the secondary receiver does not support the RRM measurement function.

Those skilled in the art should understand that the relevant description of the communication method on the network device side in the embodiments of the present application may be understood by referring to the relevant description of the communication method on the terminal device side in the embodiments of the present application.

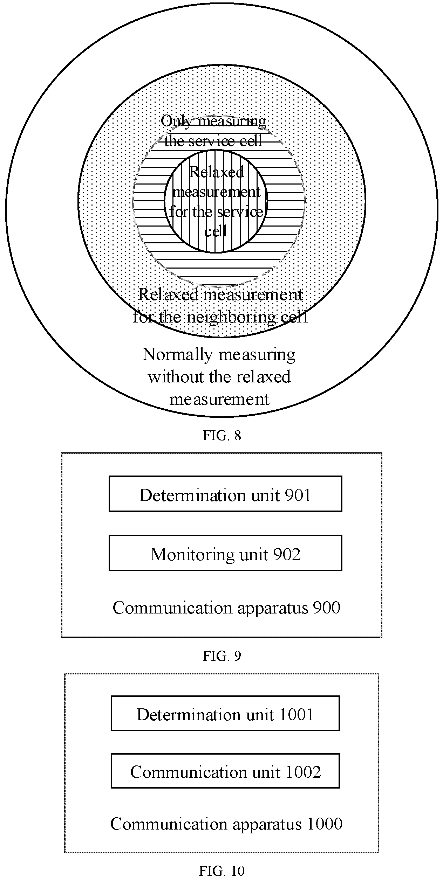

FIG. 8 is a schematic diagram of different measurement behaviors of a terminal device provided in the embodiments of the present application. As shown in FIG. 8, a central area in a cell is a measurement relaxed area of a serving cell, an area where only the serving cell is measured includes the measurement relaxed area of the serving cell, a measurement relaxed area of a neighboring cell includes the area where only the serving cell is measured, and an area outside the measurement relaxed area of the neighboring cell is a normal measurement area where the measurement is not relaxed.

Optionally, within the measurement relaxed area of the serving cell, a corresponding terminal device may meet the relaxed measurement condition, and for the area outside the measurement relaxed area of the serving cell, a corresponding terminal device may not meet the relaxed measurement condition.

Optionally, within the area where only the serving cell is measured and the measurement relaxed area of the serving cell, a corresponding RRM measurement result may be greater than and/or equal to the second threshold; for the area outside the area where only the serving cell is measured and the measurement relaxed area of the serving cell, a corresponding RRM measurement result may be less than and/or equal to the second threshold.

Optionally, within the measurement relaxed area of the neighboring cell, the area where only the serving cell is measured, and the measurement relaxed area of the serving cell, the corresponding RRM measurement result may be greater than and/or equal to the first threshold. When the measurement is normally performed, and the measurement is not relaxed, the corresponding RRM measurement result is less than and/or equal to the first threshold.

In some embodiments of the present application, the network device may indicate to turn off or turn on the WUR (corresponding to the secondary receiver in the above embodiments) function.

The network device need to have a certain degree of flexibility so that the WUR function may be turned on or off at an appropriate time. For example, in some scenarios, the load of the network device is not high, or the terminal device has a higher demand for energy saving (e.g., scenarios of IoT communication deployment, such as the industrial IoT, the smart home, smart wear, etc.), or in some scenarios, the terminal device is a static and non-mobile terminal device (there is no mobility requirement for the terminal device, and the terminal device does not need to perform mobility management based on the RRM measurement), and the network device is aware of this kind of deployment in advance. At this time, the network device should use the WUR of the terminal device to receive the WUR-WUS for this terminal device that supports the WUR function as much as possible, to save power on the terminal device, and extend the standby time, etc. To this end, the network device may indicate to turn on the WUR function. For example, the terminal device may be indicated to enable the WUR function through the broadcast signaling or through the RRC signaling. For example, the RRC signaling during a attach process of the terminal device may be used to configure the terminal device to enable the WUR function. A specific signaling may be an explicit bit user switch WUR function, or may be a signaling used to configure the terminal device to use WUR to receive related parameters, such as a received bandwidth, a frequency location, a specific turn-on time/enabling time, or the like. In a case where the signaling is configured, it indicates that the WUR function is turned on.

In other scenarios, for example, in a case where the network device needs to reclaim the frequency resources used by the WUR since the high traffic load. At this time, the network device may transmit a signaling to turn off the WUR function, and the terminal device may no longer use the WUR to receive the WUS after receiving the relevant signaling. Specifically, the signaling may be carried in system information, or in a paging message (such as a PDCCH for scheduling a paging message, or a PDSCH for carrying a paging message), or in a WUR-WUS, or using an independent signaling received by the WUR (which is different from the WUR-WUS). Herein, the signaling may be the aforementioned paging message, the independent signaling (which is different from the WUR-WUS) or a bit field of the WUR-WUS. Furthermore, the signaling may also carry a configuration related to the WUS or whether the terminal device may use the traditional WUS (an energy-saving signal based on PDCCH) after turning off the WUR. Specifically, after a time period T after receiving the signaling, the terminal device falls back to using the traditional WUS (if the signaling indicates to use the traditional WUS) or a traditional manner of operating without the WUS. The T is predefined or configured by the network device through a signaling.

In some embodiments of the present application, whether to use the WUR-WUS may be determined based on the RRM measurement result.

In some embodiments of the present application, whether to use the WUR may be determined based on a threshold of a WUR receiver performance.

The WUR receiver has a simple structure and is limited by its low-power consumption requirements in working, so its reception performance is generally weaker than the reception performance of the primary receiver. Therefore, at the edge of a cell, even if the primary receiver may still normally receive a downlink signal transmitted by the network device, the WUR cannot correctly receive the wake-up signal. For example, a receiver sensitivity of a normal smart terminal is (-100) dB, while a receiver sensitivity of the WUR is about from (-80) to (-70) dB. Therefore, whether to use the WUR may be determined based on a configured value of a first threshold (corresponding to the first threshold described above). The value of the first threshold may correspond to the measurement for the measurement objects, such as the RSSI, or the RSRP, or the RSRQ, or the SINR of the current serving cell (such as a Primary cell (Pcell)). In a case where a measurement result of a measurement object is greater than (or equal to) the value of the first threshold (which is applied to a single measurement object) or a set of values of the first threshold (corresponding to a case that there are multiple measurement objects, then a measurement result of each of the multiple measurement objects is greater than a value of a threshold respectively), the terminal may use the WUR; otherwise, the terminal does not use the WUR, but falls back to using the traditional WUS or the traditional manner of operating without the WUS. The first threshold is preset, or notified to the terminal by the network through a signaling (the system information, or the RRC signaling).

In some embodiments of the present application, whether to use the WUR may be determined based on an RRM measurement threshold that is only used in serving cell measurement.

The WUR receiver may not have the RRM measurement function, or may only have the RRM measurement function for measuring the serving cell, or may only be able to obtain RRM measurement results of the serving cell (for example, sometimes the network only configures a measurement reference signal for the serving cell that can be received by the WUR, this situation is reasonable to a certain extent, because functions of the WUR is to receive the WUS of the current cell. Even if the measurement may be supported, the measurement reference signal of the current cell may be transmitted for the WUR. In a case where there is insufficient coordination between cells, a reference signal transmitted by a neighboring cell may not necessarily or cannot be guaranteed to exist within a received bandwidth of the WUR). On the other hand, for scenarios that require mobility, even in a case where the terminal is using the WUR, it is still necessary to perform the RRM measurement to meet the mobility requirements.

Therefore, in a case where the WUR of the terminal only has the RRM measurement function of measuring the serving cell (or may only obtain the RRM measurement of the serving cell), if the terminal meets the RRM measurement threshold that is only used in serving cell measurement (that is, for the intra-frequency measurement, if a measurement result of the serving cell meets: Srxlev > SIntraSearchP and Squal > SIntraSearchQ, the terminal may not choose to perform the intra-frequency measurement), the terminal only needs to measure its serving cell. At this time, the measurement task may be performed by the WUR without turning on the primary receiver to perform the RRM measurement. Therefore, at this time, the WUR may meet the reception of WUS and also may perform the RRM measurement, and the power consumption of the entire terminal may be reduced. Otherwise, if the terminal does not meet the RRM measurement threshold that is only used in serving cell measurement, the terminal needs to perform the measurements for the intra-frequency neighboring cells and inter-frequency cells, and the terminal needs to frequently turn on the primary receiver (e.g., one RRM measurement needs to be performed once in each paging cycle) to perform related RRM measurements. Obviously, the gain of using the WUR to receive the WUS may no longer exist at this time.

Therefore, whether the terminal uses the WUR may be determined based on the fact that the terminal meets the RRM measurement threshold (corresponding to the second threshold above) that is only used in serving cell measurement (that is, for the intra-frequency measurement, if the measurement result of the serving cell meets: Srxlev > SIntraSearchP and Squal > SIntraSearchQ, the terminal may not choose to perform the intra-frequency measurement). Herein, in a case where Srxlev and Squal are measured by the primary receiver based on a traditional reference signal (a SSB, or a CSI-RS), their corresponding thresholds SIntraSearchP and SIntraSearchQ may be used, or an appropriate bias may be added on their basis (to provide a certain system margin) (that is, SIntraSearchP+RRSP_delta1, SIntraSearchQ+RSRQ_delta1) to determine whether the terminal uses the WUR.

In a case where Srxlev and Squal are measured by the WUR based on a new reference signal (such as a specific sequence signal) that can be received by the WUR, the above thresholds SIntraSearchP and SIntraSearchQ may be used, or considering that an RRM measurement error based on the WUR may be larger than an RRM measurement error of the primary receiver, the appropriate bias may be added (that is, SIntraSearchP+RRSP_delta2 and SIntraSearchQ+RSRP_delta2).

In some embodiments of the present application, whether to use the WUR may be determined based on a relaxed measurement threshold of the serving cell (corresponding to the terminal device meeting the relaxed measurement condition above).

In a case where the WUR of the terminal does not have the RRM measurement function, the terminal needs to switch back to the primary receiver to perform the RRM measurement anyway. Therefore, the gain of energy saving gain of the terminal using the WUR may be discounted or no longer exist. However, in a case where the terminal meets the requirements of relaxed RRM measurement: if the measurement for the serving cell (including the Pcell) and neighboring cells (including the intra-frequency and inter-frequency neighboring cells) of the terminal may all be relaxed, for example, the RRM measurement may be performed once every K RRM measurement cycles, at this time, the terminal only needs to turn on the primary receiver for the RRM measurement every K RRM measurement cycles, and may still use the WUR to monitor the WUS in the remaining K-1 RRM measurement cycles, so there is still the gain of saving the power consumption in these K-1 cycles.

If a goal that the measurements for the serving cell (including the Pcell) and neighboring cells (including the intra-frequency and inter-frequency neighboring cells) of the termina may all be relaxed needs to be reached, at least one of the following two conditions must be met.
(1) The channel quality of the terminal is particularly good (for example, the terminal is located in the central area of the cell, e.g., an innermost circular area of the cell as shown in FIG. 8), for example Srxlev > RSRP_Threshold_1 and Squal > RSRQ_Threshold_1 (corresponding to a case that the RRM measurement result is greater than and/or equal to the third threshold in the above embodiments).

Since the measurement for the serving cell of the terminal may be relaxed, values of a combination of thresholds {RSRP_Threshold_1, RSRQ_Threshold_1} should be greater than the value of the corresponding measurement threshold in a case where only the serving cell is measured, such as RSRP_Threshold_1>SIntraSearchP and RSRQ_Threshold_1>SIntraSearchQ.

(2) A variation of a location of the terminal is very little within a time period.

With reference to the low-mobility measurement relaxed mechanism, a new threshold SSearchDeltaP and a new evaluation duration TSearchDelta may be introduced, so that when corresponding to the new threshold and the new evaluation duration, the measurement for the serving cell may also be relaxed (corresponding to a case that if the motion speed information meets the fourth threshold, the terminal device meets the relaxed measurement condition).

The new threshold SSearchDeltaP and the new evaluation duration TSearchDelta may be configured in the system information or the RRC signaling or the MAC CE signaling, or may be predefined.

Optionally, in some embodiments, in a case where the WUR of the terminal may measure both the serving cell and the neighboring cell (including the intra-frequency and/or inter-frequency neighboring cells), the measurement function and the functions of WUS may all be completed by the WUR. Therefore, conditions for using the WUR at this time may include at least one of the following: indicating by the network device, or determining based on a comparison between the RRC measurement result and the first threshold.

A method for using a low-power consumption WUR is proposed in the embodiments of the present application, the low-power consumption WUR is turned on through an indication of the network device, or the low-power consumption WUR is turned on in a case where channel conditions of the terminal device meet requirements through certain criteria (e.g., a criterion of only measuring the serving cell or a criterion of measurement relaxation of the serving cell). By using the method in the embodiments of the present application, the terminal device may correctly perform measurements while using the low-power consumption WUR to obtain the gain of low-power consumption without affecting the mobility requirements.

The above embodiments of the present application are described in detail in conjunction with the accompanying drawings; however, the present application is not limited to the specific details in the above embodiments. Within the technical concept of the present application, a variety of simple modifications may be made to the technical solution of the present application, and these simple modifications all fall within the protection scope of the present application. For example, the various specific technical features described in the above specific embodiments may be combined in any suitable mode without contradiction. In order to avoid unnecessary repetition, this application will not further explain various possible combinations. As another example, the various implementation manners of the present application may be arbitrarily combined, and as long as they do not violate the concept of the present application, they should also be regarded as the contents disclosed in the present application. As yet another example, under the premise of no conflict, the various embodiments and/or the technical features in the various embodiments described in the present application may be arbitrarily combined with the prior art, and the technical solution obtained after the combination should also fall within the protection scope of the present application.

It should also be understood that in the various method embodiments of the present application, magnitude of the serial numbers of the above-mentioned processes does not mean an order of execution. The execution order of each process should be determined by its function and internal logic, and should not constitute any limitation on the implementation process of the embodiments of the present application. In addition, in the embodiments of the present application, the terms "downlink", "uplink" and "sidelink" are used to indicate the transmission direction of signals or data, where the "downlink" is used to indicate that the transmission direction of signals or data is a first direction from a site to a user device of a cell, the "uplink" is used to indicate that the transmission direction of signals or data is a second direction from a user device of a cell to a site, and the "sidelink" is used to indicate that the transmission direction of signals or data is a third direction from user device 1 to user device 2. For example, a "downlink signal" means that the transmission direction of the signal is the first direction. In addition, in the embodiments of the present application, the term "and/or" is merely an association relationship for describing associated objects, indicating that there may be three kinds of relationships. Specifically, A and/or B may mean three cases where: A exists alone, both A and B exist, and B exists alone. In addition, the character "/" in the present application generally means that the associated objects before and after the character "/" are in an "or" relationship.

FIG. 9 is a schematic diagram of a structural composition of a communication apparatus provided in the embodiments of the present application, which is applied to a terminal device. As shown in FIG. 9, the communication apparatus 900 includes:
a determination unit 901, configured to determine a mode for monitoring a wake-up signal (WUS), where the mode for monitoring the WUS includes a first mode or a second mode; and
a monitoring unit 902, configured to monitor the WUS according to the mode that is determined.

In some embodiments, a receiver of the terminal device includes a primary receiver and a secondary receiver,
the first mode is used to indicate the mode for monitoring the WUS by the primary receiver; and
the second mode is used to indicate the mode for monitoring the WUS by the secondary receiver.

In some embodiments, the monitoring unit 902 is further configured to: in a case where the mode that is determined is the first mode, monitor the WUS using the the primary receiver by the terminal device; and in a case where the mode that is determined is the second mode, monitor the WUS using the secondary receiver by the terminal device.

In some embodiments, in a case where the mode that is determined is the first mode, the terminal device turns off the secondary receiver; and/or, in a case where the mode that is determined is the second mode, the terminal device turns off the primary receiver.

In some embodiments, a modulation manner supported by the secondary receiver is simpler than a modulation manner supported by the primary receiver; and/or,
a modulation waveform supported by the secondary receiver is simpler than a modulation waveform supported by the primary receiver; and/or,
a frequency supported by the secondary receiver is different from a frequency supported by the primary receiver; and/or,
a transmission rate supported by the secondary receiver is lower than a transmission rate supported by the primary receiver; and/or,
a bandwidth supported by the secondary receiver is narrower than a bandwidth supported by the primary receiver; and/or,
a bit rate supported by the secondary receiver is lower than the bit rate supported by the primary receiver.

In some embodiments, the WUS monitored based on the first mode is different from the WUS monitored based on the second mode in at least one of the following: the modulation manner, the modulation waveform, a corresponding frequency resource, the transmission rate, the bandwidth, or the bit rate.

In some embodiments, the communication apparatus further includes: a communication unit, which is configured to receive first indication information, where the first indication information is used to indicate the mode for monitoring the WUS; and the determination unit 901, further configured to determine the mode for monitoring the WUS according to the first indication information.

In some embodiments, the first indication information is specifically used to indicate the first mode.

In some embodiments, the first indication information is carried by one or more of the following:
an RRC signaling, a broadcast signaling, a wireless system message, a paging message, or a historical WUS.

In some embodiments, the first indication information is received by the secondary receiver, and/or the first indication information is received by the primary receiver.

In some embodiments, the first indication information is specifically used to indicate the second mode.

In some embodiments, the first indication information is carried by one or more of the following:
the RRC signaling, the broadcast signaling, the wireless system message, the paging message, and the historical WUS.

In some embodiments, the first indication information is received by the primary receiver.

In some embodiments, the first indication information is indicated in an explicit manner, and/or the first indication information is indicated in an implicit manner.

In some embodiments, the first indication information being indicated in the explicit manner includes: the first indication information including one or more bits, where the one or more bits are used to indicate the mode of the WUS.

In some embodiments, the first indication information being indicated in the implicit manner includes:
that the first indication information corresponding to a target domain or a target field in a target signaling, where the target domain or the target field is used to configure a parameter related to the second mode;
in a case where the target domain or the target field is carried in the target signaling, the first indication information indicating the second mode; and/or,
in a case where the target signaling does not carry the target domain or the target field, or the target domain or the target field is not configured with the valid parameter related to the second mode, the first indication information indicating the first mode.

In some embodiments, the parameter related to the second mode includes one or more of the following parameters:
a bandwidth of monitoring the WUS using the second mode;
a frequency of monitoring the WUS using the second mode;
a starting moment of monitoring the WUS using the second mode, and/or a turn-on moment of the secondary receiver;
a duration of monitoring the WUS using the second mode, and/or a turn-on duration of the secondary receiver; and
an ending moment of monitoring the WUS using the second mode, and/or a turn-off moment of the secondary receiver.

In some embodiments, the monitoring unit 902 is further configured to switch the mode for monitoring the WUS after monitoring the WUS the WUS according to the mode that is determined for a first duration.

In some embodiments, the communication unit is further configured to receive second indication information after monitoring the WUS according to the mode that is determined;
where the second indication information is used to indicate the mode for monitoring the WUS, and the method further includes: maintaining or switching the mode for monitoring the WUS according to the second indication information; and/or,
the second indication information is used to indicate one or more of the following: stopping, not stopping, switching, or not switching the mode for monitoring the WUS used currently, and the method also includes: stopping/switching/maintaining the mode for monitoring the WUS used currently according to the second indication information.

In some embodiments, the monitoring unit 902 is further configured to switch the mode for monitoring the WUS after receiving the second indication information for a second duration.

In some embodiments, the second indication information is carried by at least one of the following:
system information, a paging message, a physical downlink control channel (PDCCH) for scheduling the paging message, a physical downlink shared channel (PDSCH) for carrying the paging message, the WUS, or an independent signaling.

In some embodiments, the second indication information is received by the primary receiver of the terminal device, or the second indication information is received by the secondary receiver of the terminal device.

In some embodiments, the determination unit 901 is further configured to obtain a radio resource management (RRM) measurement result of a current cell.

In some embodiments, the determination unit 901 is further configured to determine the mode for monitoring the WUS as the first mode in a case where the RRM measurement result is less than and/or equal to a first threshold.

In some embodiments, the determination unit 901 is further configured to determine the mode for monitoring the WUS as the second mode in a case where the RRM measurement result is greater than and/or equal to the first threshold.

In some embodiments, the determination unit 901 is further configured to determine the mode for monitoring WUS as the second mode in a case where the RRM measurement result is greater than and/or equal to a second threshold; where the second threshold is greater than the first threshold.

In some embodiments, the determination unit 901 is further used to determine the mode for monitoring WUS as the first mode in a case where the RRM measurement result is less than and/or equal to the second threshold; where the second threshold is greater than the first threshold.

In some embodiments, the second threshold is a neighboring cell measurement starting threshold; or, the second threshold is a sum of the neighboring cell measurement starting threshold and a bias value.

In some embodiments, the primary receiver of the terminal device obtains the RRM measurement result, or the secondary receiver of the terminal device obtains the RRM measurement result.

In some embodiments, the RRM measurement result obtained by the primary receiver of the terminal device includes at least one of the following: a received signal strength indication (RSSI), a reference signal received power (RSRP), a reference signal received quality (RSRQ), or a signal to interference plus noise ratio (SINR); or,
the secondary receiver of the terminal device obtaining the RRM measurement result, includes: determining, by the secondary receiver of the terminal device, the RRM measurement result based on a preamble and/or a reference signal included in the WUS, or a reference signal other than the WUS received by the secondary receiver.

In some embodiments, the secondary receiver supports an RRM measurement function.

In some embodiments, the mode that is determined for monitoring WUS is the second mode, and the communication apparatus includes: a first measurement unit, which is included in the secondary receiver and is configured to perform an RRM measurement.

In some embodiments, the secondary receiver does not support the RRM measurement function;
the determination unit 901 is further configured to monitor the WUS using the second mode in a case where the RRM measurement result is greater than and/or equal to the second threshold; and
the communication device includes: a second measurement unit, which is included in the primary receiver and is configured to perform the RRM measurement.

In some embodiments, the determination unit 901 is further configured to determine the mode for monitoring the WUS according to a situation about whether the terminal device meets a relaxed measurement condition.

In some embodiments, the determination unit 901 is further configured to: determine the mode for monitoring the WUS as the second mode in a case where the terminal device meets the relaxed measurement condition; and/or, determine the mode for monitoring the WUS as the first mode in a case where the terminal device does not meet the relaxed measurement condition.

In some embodiments, the determination unit 901 is further configured to obtain the RRM measurement result of the current cell; in a case where the RRM measurement result is greater than and/or equal to a third threshold, the terminal device meets the relaxed measurement condition, where the third threshold is greater than the second threshold.

In some embodiments, the determination unit 901 is further confihured to determine a current motion speed information of the terminal device; in a case where the motion speed information meets a fourth threshold, the terminal device meets the relaxed measurement condition.

In some embodiments, the fourth threshold is predefined, or configured by a network device through one of the following: the system information, the RRC signaling, or a media access control control element (MAC CE) signaling.

In some embodiments, the secondary receiver does not support the RRM measurement function.

FIG. 10 is another schematic diagram of a structural composition of a communication apparatus provided in the embodiments of the present application, which is applied to a network device. As shown in FIG. 10, the communication apparatus 1000 includes:
a determination unit 1001, configured to determine a mode for transmitting the wake-up signal (WUS), where the mode for transmitting the WUS includes a third mode and a fourth mode; and
a communication unit 1002, configured to transmit the WUS according to the mode that is determined.

In some embodiments, the third mode is used to indicate a mode for receiving the transmitted WUS by a primary receiver of a terminal device; and the fourth mode is used to indicate a mode for receiving the transmitted WUS by a secondary receiver of the terminal device.

In some embodiments, the communication unit 1002 is further configured to: transmit the WUS for receiving by the primary receiver in a case where the mode that is determined is the third mode; transmit the WUS for receiving by the secondary receiver in a case where the mode that is determined is the fourth mode.

In some embodiments, the communication unit 1002 is further configured to: stopp transmitting the WUS for receiving by the secondary receiver in a case where the mode that is determined is the third mode; and/or stop transmitting the WUS for receiving by the primary receiver in a case where the mode that is determined is the fourth mode.

In some embodiments, a modulation manner of the WUS for receiving by the secondary receiver is simpler than a modulation manner of the WUS for receiving by the primary receiver; and/or,
a modulation waveform of the WUS for receiving by the secondary receiver is simpler than a modulation waveform of the WUS for receiving by the primary receiver; and/or,
a transmission rate of the WUS for for receiving by the secondary receiver is lower than a transmission rate of the WUS for receiving by the primary receiver; and/or,
a bandwidth of the WUS for receiving by the secondary receiver is narrower than a bandwidth of the WUS for receiving by the primary receiver; and/or,
a bit rate of the WUS for receiving by the secondary receiver is lower than a bit rate of the WUS for receiving by the primary receiver.

In some embodiments, the WUS for receiving by the secondary receiver is different from the WUS for receiving by the primary receiver in at least one of the following: the modulation manner, the modulation waveform, a corresponding frequency resource, the transmission rate, the bandwidth, or the bit rate.

In some embodiments, the communication unit 1002 is further configured to transmit first indication information, where the first indication information is used to indicate the mode for monitoring the WUS. In a case where the mode that is determined is the third mode, the mode for monitoring the WUS is a first mode; and/or, in a case where the mode that is determined is the fourth mode, the mode for monitoring the WUS is a second mode.

In some embodiments, the first indication information is specifically used to indicate the first mode.

In some embodiments, the first indication information is carried by one or more of the following:
an RRC signaling, a broadcast signaling, a wireless system message, a paging messages, and a historical WUS.

In some embodiments, the first indication information is used for a reception performed by the secondary receiver of the terminal device, and/or the first indication information is used for a reception performed by the primary receiver of the terminal device.

In some embodiments, the first indication information is specifically used to indicate the second mode.

In some embodiments, the first indication information is carried by one or more of the following:
the RRC signaling, the broadcast signaling, the wireless system message, the paging message, and the historical WUS.

In some embodiments, the first indication information is used for a reception performed by the primary receiver of the terminal device.

In some embodiments, the first indication information is indicated in the explicit manner, and/or the first indication information is indicated in the implicit manner.

In some embodiments, the first indication information being indicated in the explicit manner includes:
the first indication information including one or more bits, where the one or more bits are used to indicate the mode of the WUS.

In some embodiments, the first indication information being indicated in the implicit manner includes:
the first indication information corresponding to a target domain or a target field in a target signaling, where the target domain or the target field is used to configure a parameter related to the second mode;
in a case where the target domain or the target field is carried in the target signaling, the first indication information indicating the second mode; and/or,
in a case where the target signaling does not carry the target domain or the target field, or the target domain or the target field is not configured with a valid parameter related to the second mode, the first indication information indicating the first mode.

In some embodiments, the parameter related to the second mode include one or more of the following parameters:
a bandwidth of monitoring the WUS using the second mode;
a frequency of monitoring the WUS using the second mode;
a starting moment of monitoring the WUS using the second mode, and/or, a turn-on moment of the secondary receiver;
a duration of monitoring the WUS using the second mode, and/or, a turn-on duration of the secondary receiver; and
an ending moment of monitoring the WUS using the second mode and/or, a turn-off moment of the secondary receiver.

In some embodiments, the communication unit 1002 is further configured to switch the mode for transmitting the WUS after transmitting the WUS according to the mode that is determined for a first duration.

In some embodiments, the communication unit 1002 is further configured to transmit second indication information after transmitting the WUS according to the mode that is determined;
where the second indication information is used to indicate the mode for monitoring the WUS, and the method further includes: maintaining or switching the mode for transmitting the WUS according to the second indication information; and/or,
the second indication information is used to indicate one or more of the following: stopping, not stopping, switching or not switching the mode for monitoring the WUS used currently, and the method further comprises: stopping/switching/maintaining the mode for transmitting the WUS used currently according to the second indication information.

In some embodiments, the communication unit 1002 is further configured to switch the mode for transmitting the WUS after transmitting the second indication information for a second duration.

In some embodiments, the second indication information is carried by at least one of the following:
system information, a paging message, a physical downlink control channel (PDCCH) for scheduling a paging message, a physical downlink shared channel (PDSCH) for carrying a paging message, the WUS, or an independent signaling.

In some embodiments, the second indication information is used for a reception performed by the primary receiver of the terminal device, or the second indication information is used for a reception performed by the secondary receiver of the terminal device.

In some embodiments, the communication unit 1002 is further configured to receive a radio resource management (RRM) measurement result of a current cell.

In some embodiments, the determination unit 1001 is further configured to determine the mode for transmitting the WUS as the third mode in a case where the RRM measurement result is less than and/or equal to a first threshold.

In sonme embodiments, the determination unit 1001 is further configured to determine the mode for transmitting the WUS as the fourth mode in a case where the RRM measurement result is greater than and/or equal to the first threshold.

In some embodiments, the determination unit 1001 is further configured to determine the mode for transmitting the WUS as the fourth mode in a case where the RRM measurement result is greater than and/or equal to the second threshold; where the second threshold is greater than the first threshold.

In some embodiments, the determination unit 1001 is further configured to determine the mode for transmitting the WUS as the third mode in a case where the RRM measurement result is less than and/or equal to a second threshold; where the second threshold is greater than the first threshold.

In some embodiments, the second threshold is a neighboring cell measurement starting threshold; or,
the second threshold is a sum of the neighboring cell measurement starting threshold and a bias value.

In some embodiments, the communication unit 1002 is further configured to receive the RRM measurement result transmitted by the primary receiver of the terminal device, or receive the RRM measurement result transmitted by the secondary receiver of the terminal device.

In some embodiments, the RRM measurement result obtained by the primary receiver of the terminal device includes at least one of the following: a received signal strength indication (RSSI), a reference signal received power (RSRP), a reference signal received quality (RSRQ), or a signal to interference plus noise ratio (SINR); or,
a preamble and/or a reference signal included in the WUS is used for the secondary receiver to determine the RRM measurement result, or the method further includes: transmitting, by the network device, a reference signal other than the WUS to the secondary receiver, and the reference signal other than the WUS being used for the secondary receiver to determine the RRM measurement result.

In some embodiments, the secondary receiver of the terminal device supports an RRM measurement function.

In some embodiments, the mode that is determined for transmitting the WUS is the third mode, and the communication unit 1002 is further configured to receive the RRM measurement result transmitted by the secondary receiver.

In some embodiments, the secondary receiver of the terminal device does not support the RRM measurement function;
the determination unit 1001 is further configured to: transmit the WUS using the fourth mode by the network device in a case where the RRM measurement result is greater than and/or equal to a second threshold; and
the communication unit 1002 is further configured to receive the RRM measurement result transmitted by the primary receiver.

In some embodiments, the determination unit 1001 is further configured to determine the mode for transmitting the WUS according to a situation about whether the terminal device meets a relaxed measurement condition.

In some embodiments, the determination unit 1001 is further configured to: determine the mode for transmitting the WUS as the fourth mode in a case where the terminal device meets the relaxed measurement condition; and/or, determine the mode for transmitting the WUS as the third mode in a case where the terminal device does not meet the relaxed measurement condition.

In some embodiments, the communication unit 1002 is further configured to receive the RRM measurement result of the current cell; and the determination unit 1001 is further configured to: determine the terminal device meeting the relaxed measurement condition in a case where the RRM measurement result is greater than and/or equal to a third threshold, where the third threshold is greater than the second threshold.

In some embodiments, the determination unit 1001 is further configured to determine a current motion speed information of the terminal device; and in a case where the motion speed information meets the fourth threshold, the terminal device meets the relaxed measurement condition.

In some embodiments, the fourth threshold is predefined, or configured by the network device through one of the following: the system information, the RRC signaling, or a media access control control element (MAC CE) signaling.

In some embodiments, the secondary receiver does not support the RRM measurement function.

Those skilled in the art should understand that the relevant description of the above-mentioned communication apparatus in the embodiments of the present application may be understood by referring to the relevant description of the communication method in the embodiments of the present application.

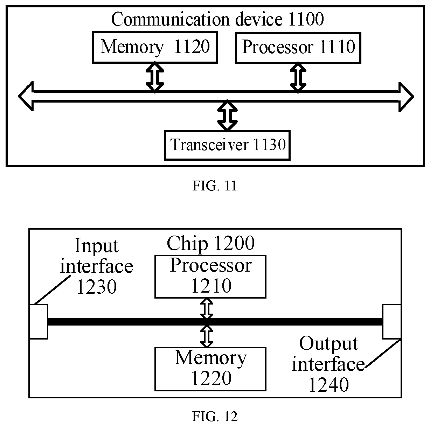

FIG. 11 is a schematic structural diagram of a communication device provided in the embodiments of the present application. The communication device 1100 may include one of the following: a terminal device or a network device. The communication device 1100 shown in FIG. 11 may include a processor 1110 and a memory 1120, the memory 1120 stores a computer program that may be executed on the processor 1110, and the processor 1110 implements the communication method in any of the above embodiments when executing the program.

Optionally, the memory 1120 may be a separate device independent from the processor 1110, or may be integrated into the processor 1110.

In some embodiments, as shown in FIG. 11, the communication device 1100 may further include a transceiver 1130, and the processor 1110 may control the transceiver 1130 to communicate with other devices, specifically, may transmit information or data to other devices, or receive information or data transmitted by other devices.

The transceiver 1130 may include a transmitter and a receiver. The transceiver 1130 may further include an antenna, and the number of the antenna may be one or more.

In some embodiments, the communication device 1100 may specifically be the network device of the embodiments of the present application, and the communication device 1100 may implement the corresponding processes implemented by the network device in various methods of the embodiments of the present application, which may not be repeated here for the sake of brevity.

In some embodiments, the communication device 1100 may specifically be the terminal device of the embodiments of the present application, and the communication device 1100 may implement the corresponding processes implemented by the terminal device in various methods of the embodiments of the present application, which may not be repeated here for the sake of brevity.

The embodiments of the present application further provide a computer storage medium, and the computer storage medium stores one or more programs. The one or more programs may be executed by one or more processors to implement the communication method in any embodiment of the present application.

In some embodiments, the computer-readable storage medium may be applied to the terminal device or network device in the embodiments of the present application, and the computer program enables the computer to perform the corresponding processes implemented by the terminal device or network device in the various methods of the embodiments of the present application, which may not be repeated here for the sake of brevity.

FIG. 12 is a schematic structural diagram of a chip provided in the embodiments of the present application. The chip 1200 shown in FIG. 12 includes a processor 1210. The processor 1210 is configured to invoke and execute a computer program from a memory, to perform the method in any embodiment of the present application.

In some embodiments, as shown in FIG. 12, the chip 1200 may further include a memory 1220. The processor 1210 may invoke and execute the computer program from the memory 1220, to implement the method in the embodiments of the present application.

Herein, the memory 1220 may be a separate device independent from the processor 1210, or may be integrated into the processor 1210.

In some embodiments, the chip 1200 may further include an input interface 1230. The processor 1210 may control the input interface 1230 to communicate with other devices or chips, and specifically, may obtain information or data transmitted by other devices or chips.

In some embodiments, the chip 1200 may further include an output interface 1240. The processor 1210 may control the output interface 1240 to communicate with other devices or chips, and specifically, may output information or data to other devices or chips.

In some embodiments, the chip may be applied to the network device in the embodiments of the present application, and the chip may implement the corresponding processes implemented by the network device in various methods of the embodiments of the present application, which may not be repeated here for the sake of brevity.

In some embodiments, the chip may be applied to the terminal device in the embodiments of the present application, and the chip may implement the corresponding processes implemented by the terminal device in various methods of the embodiments of the present application, which may not be repeated here for the sake of brevity.

It should be understood that the chip mentioned in the embodiments of the present application may also be referred to as a system-level chip, a system chip, a chip system or a system-on-chip chip, etc.

The embodiments of the present application also provide a computer program product, the computer program product includes a computer storage medium, the computer storage medium stores a computer program, and the computer program includes an instruction that can be executed by at least one processor. In a case where the instruction are executed by the at least one processor, the communication method in any embodiment of the present application is implemented.

In some embodiments, the computer program product may be applied to the terminal device or network device in the embodiments of the present application, and the computer program instruction enables the computer to perform the corresponding processes implemented by the terminal device or network device in the various methods of the embodiments of the present application, which may not be repeated here for the sake of brevity.

Optionally, the computer program product in the embodiments of the present application may also be referred to as a software product in other embodiments.

The embodiments of the present application also provide a computer program, and the computer program enables a computer to perform the communication method in any embodiment of the present application.

In some embodiments, the computer program may be applied to the terminal device or network device in the embodiments of the present application. When being executed on the computer, the computer program enables the computer to perform the corresponding processes implemented by the terminal device or network device in the various methods of the embodiments of the present application, which may not be repeated here for the sake of brevity.

The processor, the communication apparatus or the chip of the embodiments of the present application may be an integrated circuit chip and have a processing capability of signals. In the implementations, various steps of the above method embodiments may be completed by an integrated logic circuit of hardware in the processor or an instruction in a software form. The above-mentioned processor, communication apparatus or chip may include an integration of any one or more of: a general-purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing unit (NPU), a controller, a microcontroller, a microprocessor, a programmable logic device, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or erasable programmable memory, the register. The storage medium is located in the memory, and the processor reads the information in the memory and completes the steps of the above methods in combination with its hardware.

It may be understood that, the memory or computer storage medium in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that, the memory of the system and the method described herein is intended to include, but not limited to, these and any other suitable types of memories.

It should be understood that, the above memory and computer storage medium are exemplary but not the limited illustration, e.g., the memory in embodiments of the present application may also be a static Random Access Memory (static RAM, SRAM), a dynamic Random Access Memory (dynamic RAM, DRAM), a synchronous dynamic Random Access Memory (synchronous DRAM, SDRAM), a double data rate synchronous dynamic Random Access Memory (double data rate SDRAM, DDR SDRAM), an enhanced synchronous dynamic Random Access Memory (enhanced SDRAM, ESDRAM), a synch link dynamic Random Access Memory (synch link DRAM, SLDRAM), and a Direct Rambus Random Access Memory (Direct Rambus RAM, DR RAM), etc. That is, the memory in the embodiments of the present application is intended to include, but not limited to, these and any other suitable types of memories.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the embodiments of the present application.

It may be clearly understood by those skilled in the art that, for convenience and brevity of the description, specific working procedures of the system, the apparatus and the unit described above may refer to the corresponding procedures in the above method embodiments, which will not be repeated here.

In the several embodiments provided by the application, it should be understood that, the disclosed systems, apparatus, and method may be implemented in other ways. For example, the apparatus embodiments described above are only schematic, for example, the division of the units is only the division of logical functions, and there may be other division methods in an actual implementation, for example, a plurality of units or components may be combined or integrated into another system, or some features may be ignored or not be performed. On the other hand, the coupling or direct coupling or communicative connection with each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may also be distributed among a plurality of network units. A part or all of the units may be selected according to actual needs, to implement the purpose of the solutions of the embodiments.

In addition, various functional units in the various embodiments of the present application may be integrated into one processing unit, or the various units may physically exist separately, or two or more units may be integrated into one unit.

If the described functions are implemented in a form of a software functional unit and sold or used as an independent product, they may be stored in a computer readable storage medium. Based on this understanding, the technical solution of the embodiments of the present application essentially, or a part of the technical solution that contributes to the prior art, or a part of the technical solution, may be embodied in a form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes various mediums that may store program codes, such as a USB flash drive (U disk), a mobile hard disk, a read-only memory (ROM), a random access memory (RAM), a diskette, or an optical disk, etc.

The above is only a specific implementation of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of claims.

## Claims

1. A communication method, applied to a terminal device and comprising:
determining a mode for monitoring a wake-up signal (WUS), wherein the mode for monitoring the WUS includes a first mode or a second mode; and
monitoring the WUS according to the mode that is determined.

2. The method according to claim 1, wherein a receiver of the terminal device comprises a primary receiver and a secondary receiver,
the first mode is used to indicate a mode for monitoring the WUS by the primary receiver; and
the second mode is used to indicate a mode for monitoring the WUS by the secondary receiver.

3. The method according to claim 2, wherein monitoring the WUS according to the mode that is determined comprises:
in a case where the mode that is determined is the first mode, monitoring, by the terminal device, the WUS using the primary receiver; or
in a case where the mode that is determined is the second mode, monitoring, by the terminal device, the WUS using the secondary receiver.

4. The method according to claim 2 or 3, wherein
in a case where the mode that is determined is the first mode, the terminal device turns off the secondary receiver; and/or,
in a case where the mode that is determined is the second mode, the terminal device turns off the primary receiver.

5. The method according to any one of claims 2 to 4, wherein
a modulation manner supported by the secondary receiver is simpler than a modulation manner supported by the primary receiver; and/or,
a modulation waveform supported by the secondary receiver is simpler than a modulation waveform supported by the primary receiver; and/or,
a frequency supported by the secondary receiver is different from a frequency supported by the primary receiver; and/or,
a transmission rate supported by the secondary receiver is lower than a transmission rate supported by the primary receiver; and/or,
a bandwidth supported by the secondary receiver is narrower than a bandwidth supported by the primary receiver; and/or,
a bit rate supported by the secondary receiver is lower than a bit rate supported by the primary receiver.

6. The method according to any one of claims 2 to 5, wherein the WUS monitored based on the first mode is different from the WUS monitored based on the second mode in at least one of: a modulation manner, a modulation waveform, a corresponding frequency resource, a transmission rate, a bandwidth, or a bit rate.

7. The method according to any one of claims 1 to 6, wherein the method further comprises:
receiving, by the terminal device, first indication information, wherein the first indication information is used to indicate the mode for monitoring the WUS; and
determining the mode for monitoring the wake-up signal (WUS) comprises:
determining the mode for monitoring the WUS according to the first indication information.

8. The method according to claim 7, wherein the first indication information is specifically used to indicate the first mode.

9. The method according to claim 8, wherein the first indication information is carried by one or more of:
an RRC signaling, a broadcast signaling, a wireless system message, a paging message, or a historical WUS.

10. The method according to claim 8 or 9, wherein the first indication information is received by a secondary receiver, and/or the first indication information is received by a primary receiver.

11. The method according to claim 7, wherein the first indication information is specifically used to indicate the second mode.

12. The method according to claim 11, wherein the first indication information is carried by one or more of:
an RRC signaling, a broadcast signaling, a wireless system message, a paging message, or a historical WUS.

13. The method according to claim 11 or 12, wherein the first indication information is received by a primary receiver.

14. The method according to any one of claims 7 to 13, wherein the first indication information is indicated in an explicit manner, and/or the first indication information is indicated in an implicit manner.

15. The method according to claim 14, wherein the first indication information being indicated in the explicit manner comprises:
the first indication information including one or more bits, wherein the one or more bits are used to indicate a mode of the WUS.

16. The method according to claim 14, wherein the first indication information being indicated in the implicit manner comprises:
the first indication information corresponding to a target domain or a target field in a target signaling, wherein the target domain or the target field is used to configure a parameter related to the second mode;
in a case where the target domain or the target field is carried in the target signaling, the first indication information indicating the second mode; and/or,
in a case where the target signaling does not carry the target domain or the target field, or the target domain or the target field is not configured with a valid parameter related to the second mode, the first indication information indicating the first mode.

17. The method according to claim 16, wherein the parameter related to the second mode comprises one or more of parameters as follows:
a bandwidth of monitoring the WUS using the second mode;
a frequency of monitoring the WUS using the second mode;
a starting moment of monitoring the WUS using the second mode, and/or a turn-on moment of a secondary receiver of the terminal device;
a duration of monitoring the WUS using the second mode, and/or a turn-on duration of the secondary receiver of the terminal device; or
an ending moment of monitoring the WUS using the second mode, and/or a turn-off moment of the secondary receiver of the terminal device.

18. The method according to any one of claims 1 to 17, wherein the method further comprises:
switching the mode for monitoring the WUS after monitoring the WUS according to the mode that is determined for a first duration.

19. The method according to any one of claims 1 to 18, wherein the method further comprises:
receiving second indication information after monitoring the WUS according to the mode that is determined;
wherein the second indication information is used to indicate the mode for monitoring the WUS, and the method further comprises: maintaining or switching the mode for monitoring the WUS according to the second indication information; and/or,
the second indication information is used to indicate one or more of: stopping, not stopping, switching or not switching the mode for monitoring the WUS used currently, and the method further comprises: stopping/switching/maintaining the mode for monitoring the WUS used currently according to the second indication information.

20. The method according to claim 19, wherein the switching the mode for monitoring the WUS according to the second indication information comprises: switching the mode for monitoring the WUS after receiving the second indication information for a second duration.

21. The method according to claim 19 or 20, wherein the second indication information is carried by at least one of:
system information, a paging message, a physical downlink control channel (PDCCH) for scheduling the paging message, a physical downlink shared channel (PDSCH) for carrying the paging message, the WUS, or an independent signaling.

22. The method according to any one of claims 19 to 21, wherein the second indication information is received by a primary receiver of the terminal device, or the second indication information is received by a secondary receiver of the terminal device.

23. The method according to any one of claims 1 to 22, wherein the method further comprises:
obtaining, by the terminal device, a radio resource management (RRM) measurement result of a current cell.

24. The method according to claim 23, wherein determining the mode for monitoring the wake-up signal (WUS) comprises:
in a case where the RRM measurement result is less than and/or equal to a first threshold, determining the mode for monitoring the WUS as the first mode.

25. The method according to claim 23 or 24, wherein the determining the mode for monitoring the wake-up signal (WUS) comprises:
in a case where the RRM measurement result is greater than and/or equal to a first threshold, determining the mode for monitoring the WUS as the second mode.

26. The method according to any one of claims 23 to 25, wherein the determining the mode for monitoring the wake-up signal (WUS) comprises:
in a case where the RRM measurement result is greater than and/or equal to a second threshold, determining the mode for monitoring the WUS as the second mode; wherein the second threshold is greater than a first threshold.

27. The method according to any one of claims 23 to 26, wherein the determining the mode for monitoring the wake-up signal (WUS) comprises:
in a case where the RRM measurement result is less than and/or equal to a second threshold, determining the mode for monitoring the WUS as the first mode; wherein the second threshold is greater than a first threshold.

28. The method according to claim 26 or 27, wherein the second threshold is a neighboring cell measurement starting threshold; or
the second threshold is a sum of the neighboring cell measurement starting threshold and a bias value.

29. The method according to any one of claims 23 to 28, wherein the obtaining, by the terminal device, the radio resource management (RRM) measurement result of the current cell, comprises: obtaining, by a primary receiver of the terminal device, the RRM measurement result, or obtaining, by a secondary receiver of the terminal device, the RRM measurement result.

30. The method according to claim 29, wherein the RRM measurement result obtained by the primary receiver of the terminal device comprises at least one of: a received signal strength indication (RSSI), a reference signal receiving power (RSRP), a reference signal receiving quality (RSRQ), or a signal to interference plus noise ratio (SINR); or
the obtaining, by the secondary receiver of the terminal device, the RRM measurement result, comprises: determining, by the secondary receiver of the terminal device, the RRM measurement result based on a preamble and/or a reference signal included in the WUS, or a reference signal other than the WUS received by the secondary receiver.

31. The method according to any one of claims 23 to 30, wherein a secondary receiver of the terminal device supports an RRM measurement function.

32. The method according to claim 31, wherein the mode that is determined for monitoring the WUS is the second mode, and the method further comprises:
performing an RRM measurement by the secondary receiver.

33. The method according to any one of claims 23 to 30, wherein a secondary receiver of the terminal device does not support an RRM measurement function;
the determining the mode for monitoring the wake-up signal (WUS) comprises:
in a case where the RRM measurement result is greater than and/or equal to a second threshold, monitoring, by the terminal device, the WUS using the second mode; and
the method further comprises: performing an RRM measurement by a primary receiver.

34. The method according to any one of claims 1 to 33, wherein determining the mode for monitoring the wake-up signal (WUS) comprises:
determining the mode for monitoring the WUS according to a situation about whether the terminal device meets a relaxed measurement condition.

35. The method according to claim 34, wherein determining the mode for monitoring the WUS according to the situation about whether the terminal device meets the relaxed measurement condition comprises:
in a case where the terminal device meets the relaxed measurement condition, determining the mode for monitoring the WUS as the second mode; and/or,
in a case where the terminal device does not meet the relaxed measurement condition, determining the mode for monitoring the WUS as the first mode.

36. The method according to claim 34 or 35, wherein the method further comprises:
obtaining, by the terminal device, an RRM measurement result of a current cell; and
in a case where the RRM measurement result is greater than and/or equal to a third threshold, the terminal device meeting the relaxed measurement condition, wherein the third threshold is greater than a second threshold.

37. The method according to claim 34 or 35, wherein the method further comprises:
determining a current motion speed information of the terminal device; and
in a case where the motion speed information meets a fourth threshold, the terminal device meeting the relaxed measurement condition.

38. The method according to claim 37, wherein the fourth threshold is predefined, or configured by a network device through one of: system information, an RRC signaling, or a media access control control element (MAC CE) signaling.

39. The method according to any one of claims 34 to 38, wherein a secondary receiver of the terminal device does not support an RRM measurement function.

40. A communication method, applied to a network device and comprising:
determining a mode for transmitting a wake-up signal (WUS), wherein the mode for transmitting the WUS includes a third mode and a fourth mode; and
transmitting the WUS according to the mode that is determined.

41. The method according to claim 40, wherein
the third mode is used to indicate a mode for receiving the transmitted WUS by a primary receiver of a terminal device; and
the fourth mode is used to indicate a mode for receiving the transmitted WUS by a secondary receiver of the terminal device.

42. The method of claim 41, wherein transmitting the WUS according to the mode that is determined comprises:
in a case where the mode that is determined is the third mode, transmititing, by the network device, the WUS for receiving by the primary receiver; and
in a case where the mode that is determined is the fourth mode, transmitting, by the network device, the WUS for receiving by the secondary receiver.

43. The method according to claim 41 or 42, wherein the method further comprises:
in a case where the mode that is determined is the third mode, stopping, by the network device, transmitting the WUS for receiving by the secondary receiver; and/or,
in a case where the mode that is determined is the fourth mode, stopping, by the network device, transmitting the WUS for receiving by the primary receiver.

44. The method according to any one of claims 41 to 43, wherein
a modulation manner of the WUS for receiving by the secondary receiver is simpler than a modulation manner of the WUS for receiving by the primary receiver; and/or,
a modulation waveform of the WUS for receiving by the secondary receiver is simpler than a modulation waveform of the WUS for receiving by the primary receiver; and/or,
a transmission rate of the WUS for receiving by the secondary receiver is lower than a transmission rate of the WUS for receiving by the primary receiver; and/or,
a bandwidth of the WUS for receiving by the secondary receiver is narrower than a bandwidth of the WUS for receiving by the primary receiver; and/or,
a bit rate of the WUS for receiving by the secondary receiver is lower than a bit rate of the WUS for receiving by the primary receiver.

45. The method according to any one of claims 41 to 44, wherein the WUS for receiving by the secondary receiver is different from the WUS for receiving by the primary receiver in at least one of: a modulation manner, a modulation waveform, a corresponding frequency resource, a transmission rate, a bandwidth, or a bit rate.

46. The method according to any one of claims 40 to 45, wherein the method further comprises:
transmitting, by the network device, first indication information, wherein the first indication information is used to indicate a mode for monitoring the WUS;
wherein in a case where the mode that is determined is the third mode, the mode for monitoring the WUS is a first mode; and/or, in a case where the mode that is determined is the fourth mode, the mode for monitoring the WUS is a second mode.

47. The method according to claim 46, wherein the first indication information is specifically used to indicate the first mode.

48. The method according to claim 47, wherein the first indication information is carried by one or more of:
an RRC signaling, a broadcast signaling, a wireless system message, a paging message, or a historical WUS.

49. The method according to claim 47 or 48, wherein the first indication information is used for a reception performed by a secondary receiver of a terminal device, and/or the first indication information is used for a reception performed by a primary receiver of the terminal device.

50. The method according to claim 46, wherein the first indication information is specifically used to indicate the second mode.

51. The method according to claim 50, wherein the first indication information is carried by one or more of:
an RRC signaling, a broadcast signaling, a wireless system message, a paging message, or a historical WUS.

52. The method according to claim 50 or 51, wherein the first indication information is used for a reception performed by a primary receiver of the terminal device.

53. The method according to any one of claims 46 to 52, wherein the first indication information is indicated in an explicit manner, and/or the first indication information is indicated in an implicit manner.

54. The method according to claim 53, wherein the first indication information being indicated in the explicit manner comprises:
the first indication information including one or more bits, wherein the one or more bits are used to indicate a mode of the WUS.

55. The method according to claim 53, wherein the first indication information being indicated in the implicit manner comprises:
the first indication information corresponding to a target domain or a target field in a target signaling, wherein the target domain or the target field is used to configure a parameter related to the second mode;
in a case where the target domain or the target field is carried in the target signaling, the first indication information indicating the second mode; and/or,
in a case where the target signaling does not carry the target domain or the target field, or the target domain or the target field is not configured with a valid parameter related to the second mode, the first indication information indicating the first mode.

56. The method according to claim 56, wherein the parameter related to the second mode includes one or more of parameters as follows:
a bandwidth of monitoring the WUS using the second mode;
a frequency of monitoring the WUS using the second mode;
a starting moment of monitoring the WUS using the second mode, and/or a turn-on moment of a secondary receiver of a terminal device;
a duration of monitoring the WUS using the second mode, and/or a turn-on duration of the secondary receiver of the terminal device; or
an ending moment of monitoring the WUS using the second mode, and/or a turn-off moment of the secondary receiver of the terminal device.

57. The method according to any one of claims 40 to 56, wherein the method further comprises:
switching the mode for transmitting the WUS after transmitting the WUS according to the mode that is determined for a frist duration.

58. The method according to any one of claims 40 to 57, wherein the method further comprises:
transmitting second indication information after transmitting the WUS according to the mode that is determined;
wherein the second indication information is used to indicate a mode for monitoring the WUS, and the method further comprises: maintaining or switching the mode for transmitting the WUS according to the second indication information; and/or,
the second indication information is used to indicate one or more of: stopping, not stopping, switching or not switching the mode for monitoring the WUS used currently, and the method further comprises: stopping/switching/maintaining the mode for transmitting the WUS used currently according to the second indication information.

59. The method according to claim 58, wherein the switching the mode for transmitting the WUS according to the second indication information comprises: switching the mode for transmitting the WUS after transmitting the second indication information for a second duration.

60. The method according to claim 58 or 59, wherein the second indication information is carried by at least one of:
system information, a paging message, a physical downlink control channel (PDCCH) for scheduling the paging message, a physical downlink shared channel (PDSCH) for carrying the paging message, the WUS, or an independent signaling.

61. The method according to any one of claims 58 to 60, wherein the second indication information is used for a reception performed by a primary receiver of a terminal device, or the second indication information is used for a reception performed by a secondary receiver of a terminal device.

62. The method according to any one of claims 40 to 61, wherein the method further comprises:
receiving, by the network device, a radio resource management (RRM) measurement result of a current cell.

63. The method according to claim 62, wherein the determining the mode for transmitting the wake-up signal (WUS) comprises:
in a case where the RRM measurement result is less than and/or equal to a first threshold, determining the mode for transmitting the WUS as the third mode.

64. The method according to claim 62 or 63, wherein the determining the mode for transmitting the wake-up signal (WUS) comprises:
in a case where the RRM measurement result is greater than and/or equal to a first threshold, determining the mode for transmitting the WUS as the fourth mode.

65. The method according to any one of claims 62 to 64, wherein the determining the mode for transmitting the wake-up signal (WUS) comprises:
in a case where the RRM measurement result is greater than and/or equal to a second threshold, determining the mode for transmitting the WUS as the fourth mode; wherein the second threshold is greater than a first threshold.

66. The method according to any one of claims 62 to 65, wherein the determining the mode for transmitting the wake-up signal (WUS) comprises:
in a case where the RRM measurement result is less than and/or equal to a second threshold, determining the mode for transmitting the WUS as the third mode; wherein the second threshold is greater than a first threshold.

67. The method according to claim 65 or 65, wherein the second threshold is a neighboring cell measurement starting threshold; or
the second threshold is a sum of the neighboring cell measurement starting threshold and a bias value.

68. The method according to any one of claims 62 to 67, wherein the receiving, by the network device, the radio resource management (RRM) measurement result of the current cell comprises:
receiving, by the network device, the RRM measurement result transmitted by a primary receiver of a terminal device, or receiving, by the network device, the RRM measurement result transmitted by a secondary receiver of the terminal device.

69. The method according to claim 68, wherein the RRM measurement result obtained by the primary receiver of the terminal device comprises at least one of: a received signal strength indication (RSSI), a reference signal receiving power (RSRP), a reference signal receiving quality (RSRQ), or a signal to interference plus noise ratio (SINR); or
wherein a preamble and/or a reference signal included in the WUS is used for the secondary receiver to determine the RRM measurement result, or the method further comprises: transmitting, by the network device, a reference signal other than the WUS to the secondary receiver, and the reference signal other than the WUS being used for the secondary receiver to determine the RRM measurement result.

70. The method according to any one of claims 62 to 69, wherein a secondary receiver of a terminal device supports an RRM measurement function.

71. The method according to claim 70, wherein the mode that is determined for transmitting the WUS is the third mode, and the method further comprises: receiving the RRM measurement result transmitted by the secondary receiver.

72. The method according to any one of claims 62 to 69, wherein a secondary receiver of a terminal device does not support an RRM measurement function;
the determining the mode for transmitting the wake-up signal (WUS) comprises:
in a case where the RRM measurement result is greater than and/or equal to a second threshold, transmitting, by the network device, the WUS using the fourth mode; and
the receiving, by the network device, the radio resource management (RRM) measurement result of the current cell comprises: receiving, by the network device, the RRM measurement result transmitted by a primary receiver of a terminal device.

73. The method according to any one of claims 40 to 72, wherein the determining the mode for transmitting the wake-up signal (WUS) comprises:
determining the mode for transmitting the WUS according to a situation about whether a terminal device meets a relaxed measurement condition.

74. The method according to claim 73, wherein the determining the mode for transmitting the WUS according to the situation about whether the terminal device meets the relaxed measurement condition comprises:
in a case where the terminal device meets the relaxed measurement condition, determining the mode for transmitting the WUS as the fourth mode; and/or,
in a case where the terminal device does not meet the relaxed measurement condition, determining the mode for transmitting the WUS as the third mode.

75. The method according to claim 73 or 74, wherein the method further comprises:
receiving, by the network device, an RRM measurement result of a current cell; and
in a case where the RRM measurement result is greater than and/or equal to a third threshold, the terminal device meeting the relaxed measurement condition, wherein the third threshold is greater than a second threshold.

76. The method according to claim 73 or 74, wherein the method further comprises:
determining a current motion speed information of the terminal device; and
in a case where the motion speed information meets a fourth threshold, the terminal device meeting the relaxed measurement condition.

77. The method according to claim 76, wherein the fourth threshold is predefined, or configured by a network device through one of: system information, an RRC signaling, or a media access control control element (MAC CE) signaling.

78. The method according to any one of claims 73 to 77, wherein a secondary receiver of the terminal device does not support an RRM measurement function.

79. A communication apparatus, comprising: a determination unit, configured to determine a mode for monitoring a wake-up signal (WUS), wherein the mode for monitoring the WUS comprises a first mode or a second mode; and a monitoring unit, configured to monitor the WUS according to the mode that is determined.

80. A communication apparatus, comprising: a determination unit, configured to determine a mode for transmitting a wake-up signal (WUS), wherein the mode of transmitting the WUS comprises a third mode and a fourth mode; and a communication unit, configured to transmit the WUS according to the mode that is determined.

81. A terminal device, comprising: a processor and a memory, wherein the memory is configured to store a computer program, the processor is configured to invoke and execute the computer program stored in the memory to perform the method according to any one of claims 1 to 39.

82. A network device, comprising: a processor and a memory, wherein the memory is configured to store a computer program, the processor is configured to invoke and execute the computer program stored in the memory to perform the method according to any one of claims 40 to 78.

83. A chip, comprising: a processor, configured to invoke and execute a computer program from a memory, to perform the method according to any one of claims 1 to 39, or to perform the method according to any one of claims 40 to 78.

84. A computer storage medium, for storing a computer program, wherein the computer program enables a terminal device to perform the method according to any one of claims 1 to 39, or the computer program enables a network device to perform the method according to any one of claims 40 to 78.

85. A computer program product, comprising a computer program instruction, wherein the computer program instruction enables a terminal device to perform the method according to any one of claims 1 to 39, or the computer program instruction enables a network device to perform the method according to any one of claims 40 to 78.

86. A computer program, wherein the computer program enables a terminal device to perform the method according to any one of claims 1 to 39, or the computer program enables a network device to perform the method according to any one of claims 40 to 78.
